# EUROPEAN PATENT APPLICATION

(11) **EP 4 507 355 A1**
(43) Date of publication of application: **12.02.2025**
(21) Application number: 23845520.8
(22) Date of filing: 25.07.2023
(51) Int. Cl.: H04W 12/67, H04W 12/00

(54) **DEVICE SECURITY PROCESSING METHOD AND ELECTRONIC DEVICES**

(30) Priority: 26.07.2022 CN 202210881648; 19.08.2022 CN 202210999711
(71) Applicant: Huawei Technologies Co., Ltd., Shenzhen, Guangdong 518129 (CN)
(72) Inventor: LI, Chengquan, Shenzhen, Guangdong 518129 (CN); DAI, Yucheng, Shenzhen, Guangdong 518129 (CN); HU, Donghua, Shenzhen, Guangdong 518129 (CN); XIA, Gaizhi, Shenzhen, Guangdong 518129 (CN); YANG, Hailong, Shenzhen, Guangdong 518129 (CN); LIU, Zhiwei, Shenzhen, Guangdong 518129 (CN); WANG, Daibin, Shenzhen, Guangdong 518129 (CN)
(74) Representative: Pfenning, Meinig & Partner mbB
(86) International application number: PCT/CN2023/109017
(87) International publication number: WO 2024/022310

(57) **Abstract**

This application provides a device security processing method and an electronic device. A first electronic device displays a first user interface or first prompt information. The first electronic device receives a first operation of a user on the first user interface or the first prompt information. The first operation is used to eliminate a security risk item that exists on a second electronic device. The first electronic device sends a first instruction to the second electronic device after receiving the first operation. The first instruction indicates the second electronic device to eliminate the security risk item that exists on the second electronic device. In this way, the user can view, on the first electronic device, the security risk item that exists on the second electronic device. When it is inconvenient for the user to perform an operation on the second electronic device, the first electronic device can receive a user operation to eliminate the security risk item that exists on the second electronic device. This ensures device security of the second electronic device, and avoids leakage of user data on the second electronic device.

## Description

This application claims priorities to Chinese Patent Application No. 202210881648.9, filed with the China National Intellectual Property Administration on July 26, 2022 and entitled "DEVICE SECURITY INFORMATION DISPLAY AND PROCESSING METHOD", and to Chinese Patent Application No. 202210999711.9, filed with the China National Intellectual Property Administration on August 19, 2022 and entitled "DEVICE SECURITY PROCESSING METHOD AND ELECTRONIC DEVICE", both of which are incorporated herein by reference in their entireties.

### TECHNICAL FIELD

This application relates to the field of security technologies in the technical field, and in particular, to a device security processing method and an electronic device.

### BACKGROUND

With development of terminal device technologies and transformations such as smart homes, smart travel, and smart office, consumers use terminal devices more frequently. As terminal device interconnections increase, security risks of connections between terminal devices also increase. How to ensure normal use of functions of interconnected devices and prevent the devices from being maliciously attacked is to be further studied.

### SUMMARY

This application provides a device security processing method and an electronic device, so that a local device can further receive a user operation to eliminate a security risk on the local device or another interconnected device, to improve security of the local device or the another interconnected device, ensure normal use of the device, and prevent leakage of user privacy.

According to a first aspect, this application provides a device security processing system. The system includes a first electronic device and a second electronic device. The first electronic device is configured to display a first user interface or first prompt information, where a security risk item that exists on the second electronic device is displayed on the first user interface, or the first prompt information indicates that a security risk item exists on the second electronic device, and the security risk item that exists on the second electronic device is related to user privacy. The first electronic device is further configured to receive a first operation of a user on the first user interface or the first prompt information, where the first operation is used to eliminate the security risk item that exists on the second electronic device. The first electronic device is further configured to send a first instruction to the second electronic device after receiving the first operation. The second electronic device is configured to: after receiving the first instruction, eliminate the security risk item that exists on the second electronic device.

In this way, the user can view, on the first electronic device, the security risk item that exists on the second electronic device. When it is inconvenient for the user to perform an operation on the second electronic device, the first electronic device can receive a user operation to eliminate the security risk item that exists on the second electronic device. This ensures device security of the second electronic device, and avoids leakage of user data on the second electronic device.

With reference to the first aspect, in a possible implementation, the first electronic device is further configured to: after sending the first instruction to the second electronic device, stop displaying, on the first user interface, the security risk item that exists on the second electronic device, or stop displaying the first prompt information.

In this way, after the first electronic device sends the first instruction to the second electronic device, the first electronic device can stop displaying a security risk event that exists on the second electronic device.

With reference to the first aspect, in a possible implementation, the second electronic device is further configured to send a second instruction to the first electronic device after eliminating the security risk item that exists on the second electronic device. The first electronic device is further configured to: after receiving the second instruction, stop displaying, on the first user interface, the security risk item that exists on the second electronic device, or stop displaying the first prompt information.

In this way, after the first electronic device determines that the second electronic device has eliminated a security risk event that exists on the second electronic device, the first electronic device can stop displaying the security risk event that exists on the second electronic device.

With reference to the first aspect, in a possible implementation, the security risk item that exists on the second electronic device includes one or more items. The first operation is an operation of eliminating a first item in the security risk item that exists on the second electronic device. The second electronic device is specifically configured to: after receiving the first instruction, eliminate the first item that exists on the second electronic device.

In this way, the first electronic device can receive user operations to eliminate, one by one, security risk items that exist on the second electronic device, so that the user selectively eliminates one or more security risk items that exist on the second electronic device.

With reference to the first aspect, in a possible implementation, the security risk item that exists on the second electronic device includes one or more items. The first operation is an operation of eliminating all the items in the security risk item that exists on the second electronic device. The second electronic device is specifically configured to: after receiving the first instruction, eliminate all the items that exist on the second electronic device.

In this way, the first electronic device can receive the user operation to "one-touch eliminate" all security risk items that exist on the second electronic device, which reduces a user operation, and is convenient and quick.

With reference to the first aspect, in a possible implementation, the first electronic device is further configured to display a second user interface before displaying the first user interface, where the second user interface includes a device option of the first electronic device and a device option of the second electronic device, the device option of the first electronic device includes a security level indicator of the first electronic device, and the device option of the second electronic device includes a security level indicator of the second electronic device; and the security level indicator indicates a security status of an electronic device, and the security status includes any one of a high risk, a medium risk, a low risk, and no risk. The first electronic device is specifically configured to: receive and respond to a second operation of the user on the device option of the second electronic device on the second user interface, and display the first user interface.

Optionally, if the security status of the first electronic device is different from the security status of the second electronic device, the security level indicator of the first electronic device is different from the security level indicator of the second electronic device.

In this way, the first electronic device can display the security status of the first electronic device and/or a security status of another device, so that the user can monitor the security statuses of the first electronic device and the second electronic device, and manage and control an electronic device that is in a poor security state.

With reference to the first aspect, in a possible implementation, the first electronic device is further configured to: receive and respond to a third operation of the user on the second user interface, and display a third user interface, where a security risk item that exists on the first electronic device and the security risk item that exists on the second electronic device are displayed on the third user interface. The first electronic device is further configured to receive a fourth operation of the user on the third user interface, where the fourth operation is used to eliminate the security risk item on the first electronic device and the security risk item that exists on the second electronic device. The first electronic device is further configured to: in response to the fourth operation, eliminate the security risk item that exists on the first electronic device, and send a third instruction to the second electronic device. The second electronic device is further configured to: after receiving the third instruction, eliminate the security risk item that exists on the second electronic device.

Optionally, the user may perform operations on the first electronic device to eliminate, one by one, security risk items that exist on both the first electronic device and the second electronic device. For example, an application 1 and an application 2 exist on both the first electronic device and the second electronic device, and the application 1 and the application 2 are malicious applications. The user may perform an operation on the first electronic device to "one-touch uninstall" the application 1 that exists on both the first electronic device and the second electronic device. The first electronic device may further receive a user operation to "one-touch uninstall" the application 2 that exists on both the first electronic device and the second electronic device.

Optionally, the user may perform an operation on the first electronic device to "one-touch" eliminate all security risk items that exist on both the first electronic device and the second electronic device. For example, an application 1 and an application 2 exist on both the first electronic device and the second electronic device, and the application 1 and the application 2 are malicious applications. The user may perform an operation on the first electronic device to "one-touch uninstall" the application 1 and the application 2 that exist on both the first electronic device and the second electronic device. An operation is simple.

With reference to the first aspect, in a possible implementation, the first electronic device is specifically configured to: display second prompt information after receiving the first operation, where the second prompt information includes a first control, and the second prompt information indicates whether to eliminate the security risk item that exists on the second electronic device; and receive and respond to a fifth operation on the first control, and send the first instruction to the second electronic device.

In this way, before the second electronic device eliminates the security risk item that exists on the second electronic device, the first electronic device can display prompt information, to avoid a misoperation of the user.

Optionally, the prompt information may alternatively be displayed on the second electronic device.

With reference to the first aspect, in a possible implementation, the second electronic device is further configured to send the second instruction to the first electronic device after eliminating the security risk item that exists on the second electronic device. The first electronic device is further configured to display third prompt information after receiving the second instruction, where the third prompt information includes a second control, and the third prompt information indicates whether to cancel elimination of the security risk item that exists on the second electronic device. The first electronic device is specifically configured to: after receiving and responding to a sixth operation on the second control, determine to eliminate the security risk item that exists on the second electronic device.

In this way, after the second electronic device eliminates the security risk item that exists on the second electronic device, the first electronic device can display prompt information, to notify the user of an operation that has been performed by the second electronic device, and can provide an option for the user to cancel the operation that has been performed by the second electronic device.

Optionally, the prompt information may alternatively be displayed on the second electronic device.

With reference to the first aspect, in a possible implementation, eliminating the security risk item that exists on the second electronic device includes enabling a security function supported by the second electronic device, eliminating a security risk event generated by the second electronic device in first duration, and performing a security protection suggestion for the second electronic device.

According to a second aspect, this application provides a device security processing method. The method includes: A first electronic device displays a first user interface or first prompt information, where a security risk item that exists on a second electronic device is displayed on the first user interface, or the first prompt information indicates that a security risk item exists on a second electronic device, and the security risk item that exists on the second electronic device is related to user privacy. The first electronic device receives a first operation of a user on the first user interface or the first prompt information, where the first operation is used to eliminate the security risk item that exists on the second electronic device. The first electronic device sends a first instruction to the second electronic device after receiving the first operation, where the first instruction indicates the second electronic device to eliminate the security risk item that exists on the second electronic device.

In this way, the user can view, on the first electronic device, the security risk item that exists on the second electronic device. When it is inconvenient for the user to perform an operation on the second electronic device, the first electronic device can receive a user operation to eliminate the security risk item that exists on the second electronic device. This ensures device security of the second electronic device, and avoids leakage of user data on the second electronic device.

With reference to the second aspect, in a possible implementation, after the first electronic device sends the first instruction to the second electronic device, the method further includes: The first electronic device stops displaying, on the first user interface, the security risk item that exists on the second electronic device, or stops displaying the first prompt information.

In this way, after the first electronic device sends the first instruction to the second electronic device, the first electronic device can stop displaying a security risk event that exists on the second electronic device.

With reference to the second aspect, in a possible implementation, after the first electronic device sends the first instruction to the second electronic device, the method further includes: The first electronic device receives a second instruction sent by the second electronic device, where the second instruction indicates that the second electronic device has eliminated the security risk item that exists on the second electronic device. In response to the second instruction, the first electronic device stops displaying, on the first user interface, the security risk item that exists on the second electronic device, or stops displaying the first prompt information.

In this way, after the first electronic device determines that the second electronic device has eliminated a security risk event that exists on the second electronic device, the first electronic device can stop displaying the security risk event that exists on the second electronic device.

With reference to the second aspect, in a possible implementation, the security risk item that exists on the second electronic device includes one or more items. The first operation is an operation of eliminating a first item in the security risk item that exists on the second electronic device.

In this way, the first electronic device can receive user operations to eliminate, one by one, security risk items that exist on the second electronic device, so that the user selectively eliminates one or more security risk items that exist on the second electronic device.

With reference to the second aspect, in a possible implementation, the security risk item that exists on the second electronic device includes one or more items. The first operation is an operation of eliminating all the items in the security risk item that exists on the second electronic device.

In this way, the first electronic device can receive the user operation to "one-touch eliminate" all security risk items that exist on the second electronic device, which reduces a user operation, and is convenient and quick.

With reference to the second aspect, in a possible implementation, before the first electronic device displays the first user interface, the method further includes: The first electronic device displays a second user interface, where the second user interface includes a device option of the first electronic device and a device option of the second electronic device, the device option of the first electronic device includes a security level indicator of the first electronic device, and the device option of the second electronic device includes a security level indicator of the second electronic device; and the security level indicator indicates a security status of an electronic device, and the security status includes any one of a high risk, a medium risk, a low risk, and no risk. That a first electronic device displays a first user interface specifically includes: The first electronic device receives and responds to a second operation of the user on the device option of the second electronic device on the second user interface, and displays the first user interface.

Optionally, if the security status of the first electronic device is different from the security status of the second electronic device, the security level indicator of the first electronic device is different from the security level indicator of the second electronic device.

In this way, the first electronic device can display the security status of the first electronic device and/or a security status of another device, so that the user can monitor the security statuses of the first electronic device and the second electronic device, and manage and control an electronic device that is in a poor security state.

With reference to the second aspect, in a possible implementation, after the first electronic device displays the second user interface, and before the first electronic device displays the first user interface, the method further includes: The first electronic device receives and responds to a third operation of the user on the second user interface, and displays a third user interface, where a security risk item that exists on the first electronic device and the security risk item that exists on the second electronic device are displayed on the third user interface. The first electronic device receives a fourth operation of the user on the third user interface, where the fourth operation is used to eliminate the security risk item on the first electronic device and the security risk item that exists on the second electronic device. In response to the fourth operation, the first electronic device eliminates the security risk item that exists on the first electronic device, and sends a third instruction to the second electronic device, where the third instruction indicates the second electronic device to eliminate the security risk item that exists on the second electronic device.

Optionally, the user may perform operations on the first electronic device to eliminate, one by one, security risk items that exist on both the first electronic device and the second electronic device. For example, an application 1 and an application 2 exist on both the first electronic device and the second electronic device, and the application 1 and the application 2 are malicious applications. The user may perform an operation on the first electronic device to "one-touch uninstall" the application 1 that exists on both the first electronic device and the second electronic device. The first electronic device may further receive a user operation to "one-touch uninstall" the application 2 that exists on both the first electronic device and the second electronic device.

Optionally, the user may perform an operation on the first electronic device to "one-touch" eliminate all security risk items that exist on both the first electronic device and the second electronic device. For example, an application 1 and an application 2 exist on both the first electronic device and the second electronic device, and the application 1 and the application 2 are malicious applications. The user may perform an operation on the first electronic device to "one-touch uninstall" the application 1 and the application 2 that exist on both the first electronic device and the second electronic device. An operation is simple.

With reference to the second aspect, in a possible implementation, that the first electronic device sends a first instruction to the second electronic device after receiving the first operation specifically includes: The first electronic device displays second prompt information after receiving the first operation, where the second prompt information includes a first control, and the second prompt information indicates whether to eliminate the security risk item that exists on the second electronic device. The first electronic device receives and responds to a fifth operation on the first control, and sends the first instruction to the second electronic device.

In this way, before the second electronic device eliminates the security risk item that exists on the second electronic device, the first electronic device can display prompt information, to avoid a misoperation of the user.

Optionally, the prompt information may alternatively be displayed on the second electronic device.

With reference to the second aspect, in a possible implementation, after the first electronic device sends the first instruction to the second electronic device, the method further includes: The first electronic device receives the second instruction sent by the second electronic device, where the second instruction indicates that the second electronic device has eliminated the security risk item that exists on the second electronic device. The first electronic device displays third prompt information after receiving the second instruction, where the third prompt information includes a second control, and the third prompt information indicates whether to cancel elimination of the security risk item that exists on the second electronic device. The first electronic device determines, after receiving and responding to a sixth operation on the second control, to eliminate the security risk item that exists on the second electronic device.

In this way, after the second electronic device eliminates the security risk item that exists on the second electronic device, the first electronic device can display prompt information, to notify the user of an operation that has been performed by the second electronic device, and can provide an option for the user to cancel the operation that has been performed by the second electronic device.

Optionally, the prompt information may alternatively be displayed on the second electronic device.

With reference to the second aspect, in a possible implementation, eliminating the security risk item that exists on the second electronic device includes enabling a security function supported by the second electronic device, eliminating a security risk event generated by the second electronic device in first duration, and performing a security protection suggestion for the second electronic device.

According to a third aspect, this application provides an electronic device, being a first electronic device. The first electronic device includes one or more processors and one or more memories. The one or more memories are coupled to the one or more processors. The one or more memories are configured to store computer program code. The computer program code includes computer instructions. The one or more processors invoke the computer instructions to enable the first electronic device to perform the device security processing method according to any possible implementation of any one of the foregoing aspects.

According to a fourth aspect, this application provides a computer-readable storage medium, configured to store computer instructions. When the computer instructions are run on a first electronic device, the first electronic device is enabled to perform the device security processing method according to any possible implementation of any one of the foregoing aspects.

According to a fifth aspect, this application provides a computer program product. When the computer program product runs on a first electronic device, the first electronic device is enabled to perform the device security processing method according to any possible implementation of any one of the foregoing aspects.

For beneficial effects of the second aspect to the fifth aspect, refer to the descriptions of the beneficial effects in the first aspect. Details are not described herein again in embodiments of this application.

### BRIEF DESCRIPTION OF DRAWINGS

FIG. 1 is a diagram of an architecture of a system according to an embodiment of this application;
FIG. 2 is a diagram of an architecture of a system according to an embodiment of this application;
FIG. 3 is a block diagram of a software structure of an electronic device 100 according to an embodiment of this application;
FIG. 4A is a diagram of interaction between a plurality of functional modules of an electronic device 100 according to an embodiment of this application;
FIG. 4B is a diagram in which an electronic device 100 displays prompt information according to an embodiment of this application;
FIG. 4C is a diagram in which an electronic device 100 displays a service card according to an embodiment of this application;
FIG. 5A to FIG. 5J are a group of diagrams in which an electronic device 100 may display device security statuses of one or more devices according to an embodiment of this application;
FIG. 6A to FIG. 6E are a group of diagrams in which an electronic device 100 displays a security status of a device according to an embodiment of this application;
FIG. 6F to FIG. 6J are a group of diagrams of a plurality of security protection suggestions provided for an electronic device 200 according to an embodiment of this application;
FIG. 6K to FIG. 6N are a group of diagrams in which an electronic device 100 receives a user operation to "one-touch eliminate" all security risks that exist on an electronic device 200 according to an embodiment of this application;
FIG. 7A to FIG. 7H are a group of diagrams of viewing, on an electronic device 100, a security event generated by an electronic device 200 in a specific period of time according to an embodiment of this application; and
FIG. 8 is a schematic method flowchart of a device security processing method according to an embodiment of this application.

### DESCRIPTION OF EMBODIMENTS

The following clearly describes the technical solutions in embodiments of this application in detail with reference to the accompanying drawings. In the descriptions of embodiments of this application, "/" indicates "or" unless otherwise specified. For example, A/B may indicate A or B. The term "and/or" in this specification describes merely an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The term "user interface (user interface, UI)" in the following embodiments of this application is a medium interface for interaction and information exchange between an application or an operating system and a user, and implements conversion between an internal form of information and a form that can be accepted by the user. The user interface is usually in a representation form of a graphical user interface (graphical user interface, GUI), which is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of an electronic device.

Before embodiments of this application are described, technical terms in embodiments of this application are first explained.

### 1. Security risk

A security risk on an electronic device means that an application installed on the electronic device has a risk, or some information received on the electronic device has a risk, and the application or the information may steal personal data of a user.

For example, some applications may obtain information such as a call record, contact information, application use data, an account and a password, and property that are stored on the electronic device, causing personal information leakage. For another example, some information received on the electronic device may also steal the personal data of the user, causing personal information leakage.

For example, a messaging application receives a spam SMS message. After the user taps the spam SMS message, a server that sends the spam SMS message may steal the personal data of the user on the electronic device, causing personal information leakage of the user.

### 2. Device security status

An electronic device may score a security coefficient of the electronic device based on factors such as types and a quantity of some applications or some information existing on the electronic device, and a quantity of obtained information, and use an obtained score as a security status of the electronic device. The security status of the electronic device may be classified into a plurality of different levels such as a high risk, a medium risk, a low risk, and no risk.

Optionally, the electronic device may also score the security coefficient of the electronic device, to obtain different scores, for example, 100 points, 80 points, and 60 points. The scores may correspond to the security status levels of the electronic device. For example, when a security coefficient score of the device is 100 points, a corresponding security status level of the device is the "no risk". When a security coefficient score of the device ranges from 70 points to 100 points, a corresponding security status level of the device is the low risk. When a security coefficient score of the device ranges from 50 points to 70 points, a corresponding security status level of the device is the medium risk. When a security coefficient score of the device is less than 50 points, a corresponding security status level of the device is the high risk.

It should be noted that the correspondence between the security coefficient score of the device and the security status level of the device is merely used to explain this application. This is not limited in embodiments of this application.

A security coefficient score obtained when the security status of the electronic device is the high risk is less than a security coefficient score obtained when the security status of the electronic device is the medium risk. The security coefficient score obtained when the security status of the electronic device is the medium risk is less than a security coefficient score obtained when the security status of the electronic device is the low risk. The security coefficient score obtained when the security status of the electronic device is the low risk is less than a security coefficient score obtained when the security status of the electronic device is the "no risk".

The security status is not limited to the foregoing several levels. In another embodiment, the security status of the electronic device may alternatively be classified into more levels, or the security status of the electronic device may be classified into levels different from the foregoing levels. This is not limited in embodiments of this application.

Optionally, based on the security status that is of the electronic device and that includes different levels, the electronic device may display different prompt information, to indicate a user to improve the security status of the electronic device, so as to avoid personal information leakage of the user.

Specifically, when the security status of the electronic device is the high risk, the electronic device may display prompt information "Optimize now". When the security status of the electronic device is the medium risk, the electronic device may display prompt information "Optimize in time". When the security status of the electronic device is the low risk, the electronic device may display prompt information "Optimization suggested". When the security status of the electronic device is the "no risk", the electronic device may display prompt information "Good state".

### 3. Security function

After the security function is enabled, the security function may be used to protect security of personal data on an electronic device, and may prevent personal data leakage. The security function includes but is not limited to a virus scanning and removal function, a harassment call blocking function, a WLAN security detection function, a mobile guard function, a pure mode enabling function, a secure input method enabling function, a verification code protection function, a payment protection function, a find device function, a lock screen password enabling function, and the like.

The virus scanning and removal function is used to detect whether an application installed on the electronic device is a virus application or a malicious application.

The harassment call blocking function is used to detect whether an incoming call is a harassment like a marketing call or a scam call, and the incoming call is rejected if the incoming call is the harassment.

The WLAN security detection function is used to detect whether a nearby WLAN is a secure WLAN.

The mobile guard function is used to detect whether a nearby base station is a secure base station.

For the pure mode enabling function, after a pure mode function is enabled on the electronic device, the electronic device can intercept an application to be automatically installed, to avoid installing a spam application without knowledge of a user.

For the secure input method enabling function, after a secure input method function is enabled on the electronic device, when the user inputs a password on the electronic device, the electronic device automatically switches to a secure keyboard, to avoid password leakage.

After the verification code protection function is enabled on the electronic device, the verification code protection function is used to prevent some applications from obtaining a verification code.

After the payment protection function is enabled on the electronic device, the payment protection function is used to protect payment security, for example, when there is a risk, indicate the user whether to continue payment.

After the find device function is enabled on the electronic device, the find device function is used to, when the device is lost, quickly locate and track the lost device, and receive a user operation to remotely erase data on the lost device, to prevent leakage of the data on the lost device.

For the lock screen password enabling function, after the lock screen password enabling function is enabled on the electronic device, after the electronic device turns off a screen and then the electronic device turns on the screen again, the user needs to input a lock screen password to enter a user interface displayed on the electronic device before the screen is locked.

It should be noted that the security function on the electronic device may further include another function. This is not limited in embodiments of this application.

Embodiments of this application provide display of a series of functions of security functions of a local device and another interconnected device, security statuses of the devices, security risks that exist on the devices, and a suggestion for eliminating a device risk. In this way, a user can view the security statuses of the local device and the another interconnected device, the security functions of the local device and the another interconnected device, the security risks that exist on the local device and the another interconnected device, and the suggestion for eliminating the device risk. The local device can further receive a user operation to eliminate the security risk on the local device or the another interconnected device, to improve security of the local device or the another interconnected device, ensure normal use of the device, and prevent leakage of user privacy.

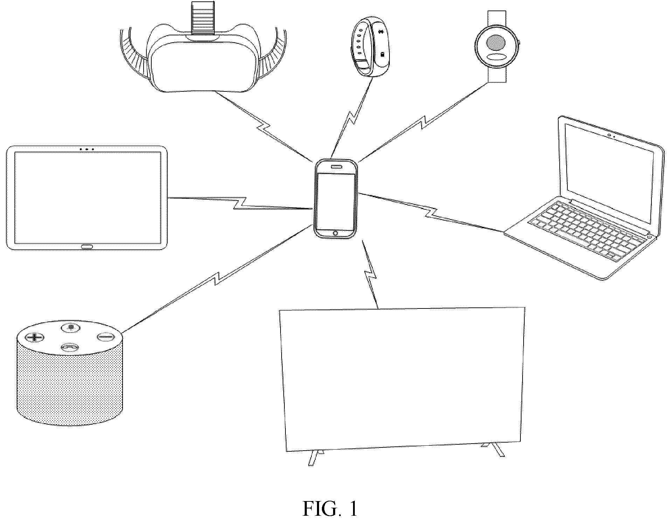

FIG. 1 is a diagram of an architecture of a system according to an embodiment of this application.

The system may include a plurality of electronic devices. Device types of the plurality of electronic devices may be various types. A specific type of the plurality of electronic devices is not specially limited in embodiments of this application. For example, the plurality of electronic devices include a mobile phone, and may further include a tablet computer, a desktop computer, a laptop computer, a handheld computer, a notebook computer, a smart screen, a wearable device, an augmented reality (augmented reality, AR) device, a virtual reality (virtual reality, VR) device, an artificial intelligence (artificial intelligence, AI) device, a head unit, a smart headset, and a game console, and may further include an internet of things (internet of things, IoT) device or a smart home device like a smart water heater, a smart lamp, or a smart air conditioner. This is not limited thereto. The plurality of devices in the system 10 may further include a non-portable terminal device like a laptop (laptop) computer having a touch-sensitive surface or a touch panel or a desktop computer having a touch-sensitive surface or a touch panel, and the like.

When the system includes a plurality of electronic devices (for example, an electronic device 100, an electronic device 200, and an electronic device 300), the electronic device 100 separately establishes a communication connection to the electronic device 200 and the electronic device 300. The electronic device 100 may display a device security status of the electronic device 100, and a security capability and an existing security risk of the electronic device 100. The electronic device 100 may further separately display device security statuses, security capabilities, and existing security risks of the electronic device 200 and the electronic device 300.

Optionally, the system may alternatively include only one electronic device (for example, an electronic device 100). In this case, the electronic device 100 may display a security capability and an existing security risk of the electronic device 100.

The plurality of electronic devices may be configured with different software operating systems (operating systems, OSs), including but not limited to Harmony^{®}, Android^{®}, iOS^{®}, Windows^{®}, Linux^{®}, and the like. Harmony^{®} is Huawei HarmonyOS.

Alternatively, the plurality of electronic devices may be all configured with a same software operating system, for example, all may be configured with Harmony^{®}.

The plurality of electronic devices may establish a communication connection in any one of the following manners.

Manner 1: The plurality of electronic devices may be connected to a same network. For example, the plurality of electronic devices may be connected to a same local area network to establish the communication connection.

Manner 2: The plurality of electronic devices may alternatively log in to a same system account to establish the communication connection. For example, system accounts to which the plurality of electronic devices log in may be all "HW1234".

Manner 3: System accounts to which the plurality of electronic devices log in may all belong to a same account group. For example, the system accounts to which the plurality of electronic devices log in includes "HW001", "HW002", and "HW003". The system accounts "HW001", "HW002", and "HW003" belong to an account group "HUAWEI Home".

Manner 4: The plurality of electronic devices may establish the communication connection in a manner like near field communication (Near Field Communication, NFC), Bluetooth (Bluetooth, BT), a wireless local area network (wireless local area network, WLAN), for example, wireless fidelity point-to-point (wireless fidelity point-to-point, Wi-Fi P2P), or an infrared (infrared, IR) technology.

Manner 5: The plurality of electronic devices may establish a temporary account group by scanning a same QR code, to establish a networking connection to implement communication.

This is not limited to the foregoing five manners. The electronic devices 100 may alternatively establish the communication connection in another manner. This is not limited in embodiments of this application.

In addition, the plurality of electronic devices may also be connected and communicate with each other in any one of the foregoing manners. This is not limited in embodiments of this application.

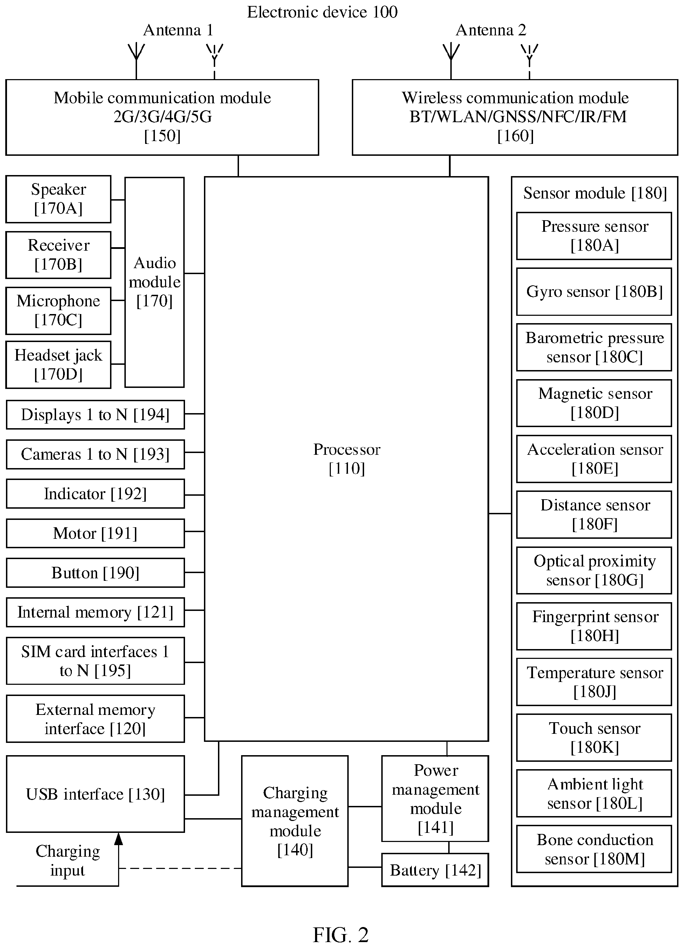

FIG. 2 is a diagram of an architecture of a system.

The electronic device 100 may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart home device, and/or a smart city device. A specific type of the electronic device is not specially limited in embodiments of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention constitutes no specific limitation on the electronic device 100. In some other embodiments of this application, the electronic device 100 may include more or fewer components than those shown in the figure, or combine some of components, or split some of components, or have different layouts of the components. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flashlight, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the electronic device 100. The processor 110 communicates with the display 194 through the DSI interface, to implement a display function of the electronic device 100.

The GPIO interface may be configured using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, a MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the electronic device 100, or may be configured to transmit data between the electronic device 100 and a peripheral device, or may be configured to connect to a headset, to play an audio through the headset. The interface may be alternatively configured to connect to another electronic device, for example, an AR device.

It may be understood that an interface connection relationship between the modules that is shown in this embodiment of the present invention is merely an example for description, and constitutes no limitation on the structure of the electronic device 100. In some other embodiments of this application, the electronic device 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device 100. The charging management module 140 supplies power to the electronic device via the power management module 141 while charging the battery 142.

The power management module 141 is configured to connect to the battery 142, the charging management module 140, and the processor 110. The power management module 141 receives an input from the battery 142 and/or an input from the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may be alternatively disposed in a same component.

A wireless communication function of the electronic device 100 may be implemented via the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the electronic device 100 and that includes wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 and at least some modules of the processor 110 may be disposed in a same component.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then, the demodulator transmits the low-frequency baseband signal obtained through demodulation to the baseband processor for processing. After being processed by the baseband processor, the low-frequency baseband signal is transmitted to the application processor. The application processor outputs a sound signal through an audio device (which is not limited to the speaker 170A, the receiver 170B, and the like), or displays an image or a video through the display 194. In some embodiments, the modem processor may be an independent component. In some other embodiments, the modem processor may be independent of the processor 110, and is disposed in a same component as the mobile communication module 150 or another functional module.

The wireless communication module 160 may provide a solution that is applied to the electronic device 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near-field communication, NFC), and an infrared (infrared, IR) technology. The wireless communication module 160 may be one or more components integrating at least one communication processing module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert a processed signal into an electromagnetic wave for radiation through the antenna 2.

In some embodiments, in the electronic device 100, the antenna 1 and the mobile communication module 150 are coupled, and the antenna 2 and the wireless communication module 160 are coupled, so that the electronic device 100 can communicate with a network and another device using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The electronic device 100 implements a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the electronic device 100 may include one or N displays 194, where N is a positive integer greater than 1.

The electronic device 100 may implement a photographing function via the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format, for example, RGB or YUV. In some embodiments, the electronic device 100 may include one or N cameras 193, where N is a positive integer greater than 1.

The digital signal processor is configured to process a digital signal, and may further process another digital signal in addition to the digital image signal. For example, when the electronic device 100 selects a frequency, the digital signal processor is configured to perform Fourier transform and the like on frequency energy.

The video codec is configured to compress or decompress a digital video. The electronic device 100 may support one or more video codecs. In this way, the electronic device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the electronic device 100 may be implemented via the NPU, for example, image recognition, facial recognition, speech recognition, and text understanding.

The internal memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM, which is generally referred to as a DDR5 SDRAM), and the like.

The non-volatile memory may include a magnetic disk storage component and a flash memory (flash memory).

The flash memory may be classified into an NOR flash, an NAND flash, a 3D NAND flash, and the like according to an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia Card, eMMC), and the like based on storage specifications.

The random access memory may be directly read and written by the processor 110, may be configured to store an executable program (for example, machine instructions) in an operating system or another running program, and may be further configured to store data of a user, data of an application, and the like.

The non-volatile memory may also store the executable program, the data of the user, the data of the application, and the like, which may be loaded into the random access memory in advance for directly reading and writing by the processor 110.

The external memory interface 120 may be configured to connect to an external non-volatile memory, to extend a storage capability of the electronic device 100. The external non-volatile memory communicates with the processor 110 through the external memory interface 120, to implement a data storage function. For example, files such as music and a video are stored in the external non-volatile memory.

The electronic device 100 may implement an audio function, for example, music playing or recording, via the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: encode and decode an audio signal. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The electronic device 100 may be configured to listen to music or answer a call in a hands-free mode via the speaker 170A.

The receiver 170B, also referred to as an "earpiece", is configured to convert an audio electrical signal into a sound signal. When a call is answered or audio information is listened to through the electronic device 100, the receiver 170B may be put close to a human ear to listen to a voice.

The microphone 170C, also referred to as a "mike" or a "mic", is configured to convert a sound signal into an electrical signal. When making a call or sending voice information, the user may make a sound near the microphone 170C through the mouth of the user, to input a sound signal to the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may alternatively be disposed in the electronic device 100, to collect a sound signal, implement noise reduction, and identify a sound source, so as to implement a directional recording function and the like.

The headset jack 170D is configured to connect to a wired headset. The headset jack 170D may be a USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are many types of pressure sensors 180A, such as a resistive pressure sensor, an inductive pressure sensor, and a capacitive pressure sensor. The capacitive pressure sensor may include at least two parallel plates made of conductive materials. When force is applied to the pressure sensor 180A, capacitance between electrodes changes. The electronic device 100 determines pressure intensity based on the change of the capacitance. When a touch operation is performed on the display 194, the electronic device 100 detects intensity of the touch operation via the pressure sensor 180A. The electronic device 100 may also calculate a touch location based on a detection signal of the pressure sensor 180A. In some embodiments, touch operations that are performed in a same touch location but have different touch operation intensity may correspond to different operation instructions. For example, when a touch operation whose touch operation intensity is less than a first pressure threshold is performed on an SMS message application icon, an instruction for viewing an SMS message is performed. When a touch operation whose touch operation intensity is greater than or equal to a first pressure threshold is performed on an SMS message application icon, an instruction for creating a new SMS message is performed.

The gyro sensor 180B may be configured to determine a motion posture of the electronic device 100. In some embodiments, angular velocities of the electronic device 100 around three axes (namely, axes x, y, and z) may be determined via the gyro sensor 180B. The gyro sensor 180B may be configured to implement image stabilization during photographing. For example, when the shutter is pressed, the gyro sensor 180B detects an angle at which the electronic device 100 jitters, calculates, based on the angle, a distance for which a lens module needs to compensate, and allows the lens to cancel the jitter of the electronic device 100 through reverse motion, to implement image stabilization. The gyro sensor 180B may also be used in a navigation scenario and a somatic game scenario.

The barometric pressure sensor 180C is configured to measure barometric pressure. In some embodiments, the electronic device 100 calculates an altitude based on a value of the barometric pressure measured by the barometric pressure sensor 180C, to assist in positioning and navigation.

The magnetic sensor 180D includes a Hall sensor. The electronic device 100 may detect opening or closing of a flip cover via the magnetic sensor 180D. In some embodiments, when the electronic device 100 is a flip phone, the electronic device 100 may detect opening or closing of the flip cover via the magnetic sensor 180D. Further, a feature like automatic unlocking of the flip cover is set based on a detected opening or closing state of the flip cover.

The acceleration sensor 180E may detect magnitude of accelerations of the electronic device 100 in various directions (generally on three axes), may detect magnitude and a direction of gravity when the electronic device 100 is stationary, and may be further configured to recognize a posture of the electronic device, and is used in an application like switching between a landscape mode and a portrait mode or a pedometer.

The distance sensor 180F is configured to measure a distance. The electronic device 100 may measure the distance in an infrared manner or a laser manner. In some embodiments, in a photographing scenario, the electronic device 100 may measure a distance via the distance sensor 180F to implement quick focusing.

The optical proximity sensor 180G may include, for example, a light-emitting diode (LED) and an optical detector, for example, a photodiode. The light-emitting diode may be an infrared light-emitting diode. The electronic device 100 emits infrared light via the light-emitting diode. The electronic device 100 detects infrared reflected light from a nearby object via the photodiode. When sufficient reflected light is detected, it may be determined that there is an object near the electronic device 100. When insufficient reflected light is detected, the electronic device 100 may determine that there is no object near the electronic device 100. The electronic device 100 may detect, via the optical proximity sensor 180G, that the user holds the electronic device 100 close to an ear for a call, to automatically turn off a screen for power saving. The optical proximity sensor 180G may also be used in a smart cover mode or a pocket mode to automatically perform screen unlocking or locking.

The ambient light sensor 180L is configured to sense ambient light brightness. The electronic device 100 may adaptively adjust brightness of the display 194 based on the sensed ambient light brightness. The ambient light sensor 180L may also be configured to automatically adjust a white balance during photographing. The ambient light sensor 180L may further cooperate with the optical proximity sensor 180G to detect whether the electronic device 100 is in a pocket, to avoid an accidental touch.

The fingerprint sensor 180H is configured to collect a fingerprint. The electronic device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device 100 executes a temperature processing strategy using the temperature detected by the temperature sensor 180J. For example, when the temperature reported by the temperature sensor 180J exceeds a threshold, the electronic device 100 lowers performance of a processor nearby the temperature sensor 180J, to reduce power consumption for thermal protection. In some other embodiments, when the temperature is less than another threshold, the electronic device 100 heats the battery 142 to prevent the electronic device 100 from being shut down abnormally due to a low temperature. In some other embodiments, when the temperature is lower than still another threshold, the electronic device 100 boosts an output voltage of the battery 142 to avoid abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touch screen". The touch sensor 180K is configured to detect a touch operation performed on or near the touch sensor. The touch sensor may transfer the detected touch operation to the application processor to determine a type of a touch event. A visual output related to the touch operation may be provided via the display 194. In some other embodiments, the touch sensor 180K may alternatively be disposed on a surface of the electronic device 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is obtained by the bone conduction sensor 180M and that is of the vibration bone of the vocal-cord part, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button or a touch button. The electronic device 100 may receive a button input, and generate a button signal input related to a user setting and function control of the electronic device 100.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card.

A software system of the electronic device 100 may use a layered architecture, an eventdriven architecture, a microkernel architecture, a micro service architecture, or a cloud architecture. In this embodiment of the present invention, an Android system of a layered architecture is used as an example to illustrate a software structure of the electronic device 100.

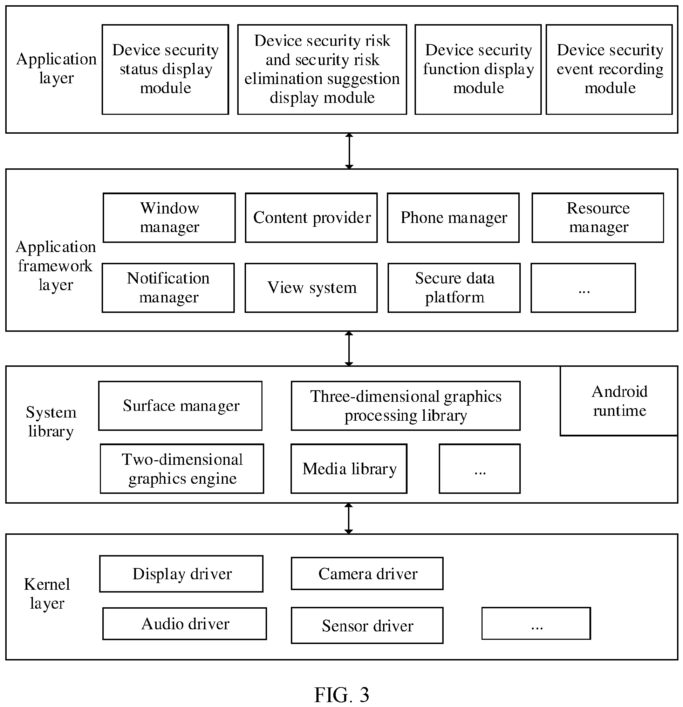

FIG. 3 is a block diagram of the software structure of the electronic device 100 according to an embodiment of the present invention.

In the layered architecture, software is divided into several layers. Each layer has a clear role and task. The layers communicate with each other through a software interface. In some embodiments, the Android system is divided into four layers: an application layer, an application framework layer, an Android runtime (Android runtime) and system library, and a kernel layer from top to bottom.

The application layer may include a series of application packages. The application packages may include applications such as Camera, Gallery, Calendar, Phone, Map, Navigation, WLAN, Bluetooth, Music, Video, and Messaging.

As shown in FIG. 3, the application layer further includes a device security status display module, a device security risk and security risk elimination suggestion display module, a device security function display module, and a device security event recording module.

The device security status display module is used by electronic device to display a security status of the local device or another interconnected device.

The security status of the electronic device may be classified into a plurality of different levels such as a high risk, a medium risk, a low risk, and no risk.

The electronic device may also score a security coefficient of the electronic device, to obtain different scores, for example, 100 points, 80 points, and 60 points. The scores may correspond to the security status levels of the electronic device. For example, when a security coefficient score of the device is 100 points, a corresponding security status level of the device is the "no risk". When a security coefficient score of the device ranges from 70 points to 100 points, a corresponding security status level of the device is the low risk. When a security coefficient score of the device ranges from 50 points to 70 points, a corresponding security status level of the device is the medium risk. When a security coefficient score of the device is less than 50 points, a corresponding security status level of the device is the high risk.

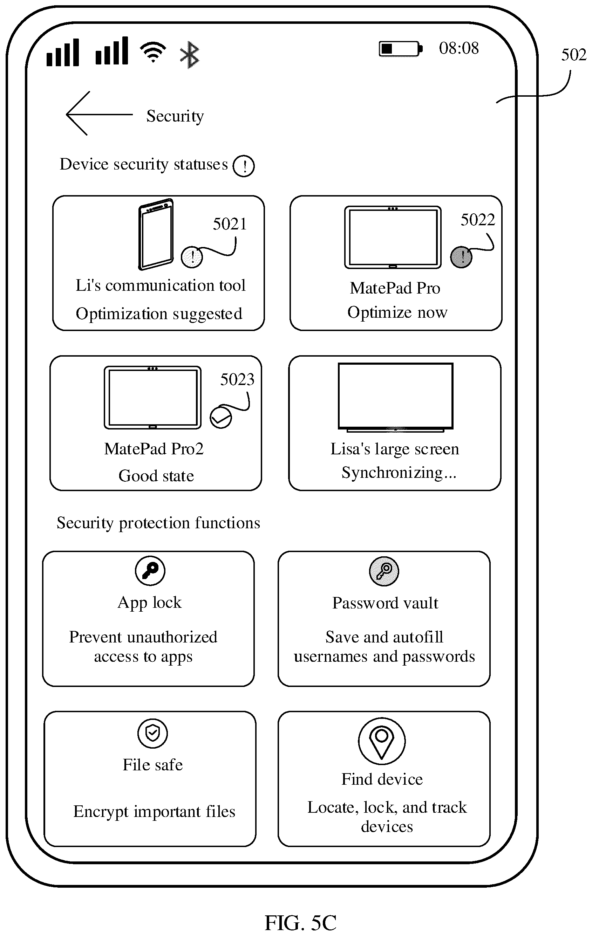

For details, refer to an embodiment shown in FIG. 5C.

The device security risk and security risk elimination suggestion display module is used by the electronic device to display a security risk that exists on the local device or the another interconnected device, and a suggestion on how to eliminate the security risk.

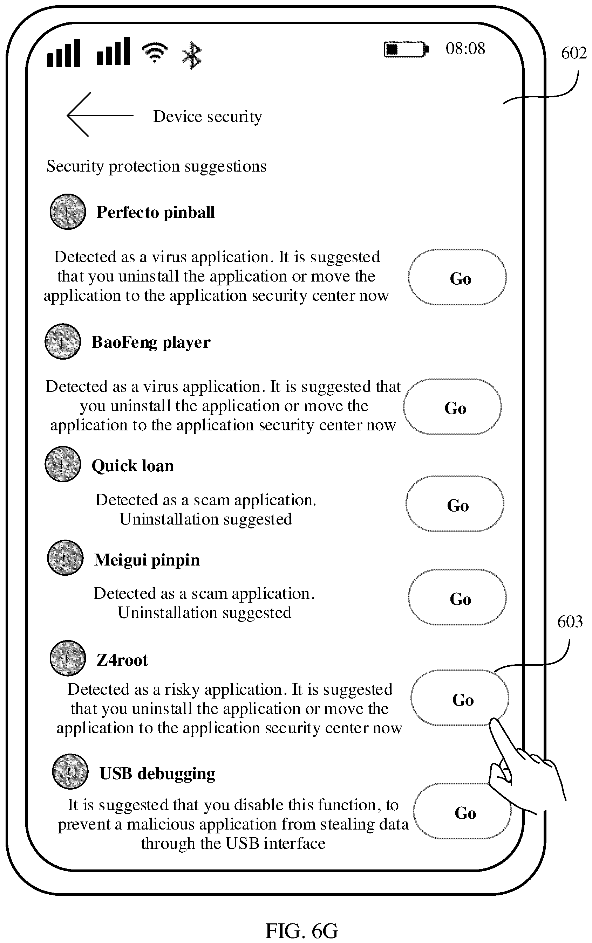

For details, refer to an embodiment shown in FIG. 6G to FIG. 6N.

The device security function display module is used by the electronic device to display a security function supported by the local device or the another interconnected device.

The device security event recording module is used by the electronic device to display a security event generated by the local device or the another interconnected device in a specific period of time.

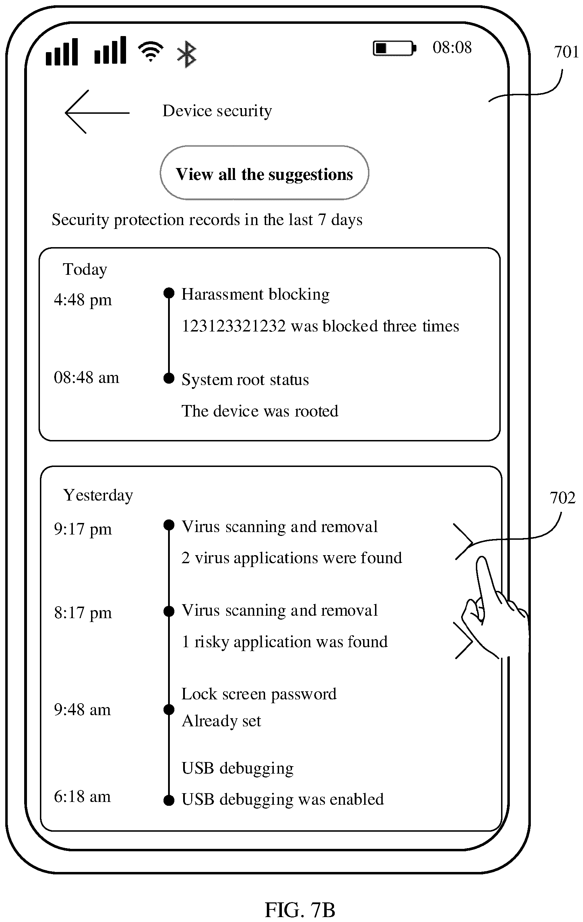

For details, refer to an embodiment shown in FIG. 7B to FIG. 7F.

The application framework layer provides an application programming interface (application programming interface, API) and a programming framework for an application at the application layer. The application framework layer includes some predefined functions.

As shown in FIG. 3, the application framework layer may include a window manager, a content provider, a view system, a phone manager, a resource manager, a notification manager, a secure data platform, and the like.

The window manager is used to manage a window program. The window manager may obtain a size of the display, determine whether there is a status bar, perform screen locking, take a screenshot, and the like.

The content provider is used to store and obtain data, and enable the data to be accessible by an application. The data may include a video, an image, an audio, calls that are made and answered, a browse history, a bookmark, a phone book, and the like.

The view system includes a visual control, for example, a text display control or a picture display control. The view system may be used to construct an application. A display interface may include one or more views. For example, a display interface including an SMS message notification icon may include a text display view and a picture display view.

The phone manager is used to provide a communication function of the electronic device 100, for example, management of a call status (including answering, declining, or the like).

The resource manager provides various resources such as a localized character string, an icon, a picture, a layout file, and a video file for an application.

The notification manager enables an application to display notification information in the status bar, may be used to convey a notification message, and may automatically disappear after a short pause without requiring user interaction. For example, the notification manager is used to notify download completion and provide a message notification. The notification manager may alternatively be a notification that appears in a top status bar of the system in a form of a graph or a scroll bar text, for example, a notification of an application that runs in a background, or may be a notification that appears on a screen in a form of a dialog window. For example, text information is displayed in the status bar, an announcement is given, the electronic device vibrates, or an indicator light blinks.

The secure data platform provides the following plurality of capabilities: a device discovery capacity, a device security event storage capability, a device security risk computing capability, a device security function management capability, and the like.

The device discovery capability is used by the electronic device 100 to discover the interconnected device.

The device security event storage capability is used to store a device security event that is generated in a specific period of time and a security capability supported by the device, which are on the electronic device 100 or sent by the another interconnected device.

The device security risk computing capability is used by the electronic device 100 to obtain a device security risk level of the electronic device 100 through computing based on the device security event on the electronic device 100, or the electronic device 100 may also obtain a device security risk level of the another interconnected device through computing based on the device security event sent by the another interconnected device. The device security risk computing capability is further used to display, based on the security risk that exists on the electronic device 100 and/or a security risk that exists on an electronic device 200, a related suggestion for eliminating the security risk.

The device security function management capability is used by the electronic device 100 to display a security function supported by the electronic device 100, or display, based on the device security capability sent by the another interconnected device, a security function supported by the another interconnected device. The electronic device 100 may also receive an operation of the user, to control the security function of the electronic device 100 or control the security function of another interconnected device, for example, control enabling or disabling of the security function.

The Android runtime includes a kernel library and a virtual machine. The Android runtime is responsible for scheduling and management of the Android system.

The kernel library includes two parts: a function that needs to be invoked in a Java language, and a kernel library of Android.

The application layer and the application framework layer run on the virtual machine. The virtual machine executes Java files at the application layer and the application framework layer as binary files. The virtual machine is used to perform functions such as object lifecycle management, stack management, thread management, security and exception management, and garbage collection.

The system library may include a plurality of functional modules, such as a surface manager (surface manager), a media library (Media Library), a three-dimensional graphics processing library (for example, an OpenGL ES), and a 2D graphics engine (for example, an SGL).

The surface manager is used to manage a display subsystem and provide fusion of 2D and 3D layers for a plurality of applications.

The media library supports playback and recording in a plurality of commonly used audio and video formats, a static image file, and the like. The media library may support a plurality of audio and video encoding formats such as MPEG-4, H.264, MP3, AAC, AMR, JPG, and PNG.

The three-dimensional graphics processing library is used to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

The following describes an example of a working procedure of the software and the hardware of the electronic device 100 with reference to a photographing scenario.

When the touch sensor 180K receives a touch operation, a corresponding hardware interrupt is sent to the kernel layer. The kernel layer processes the touch operation into an original input event (including information such as touch coordinates and a time stamp of the touch operation). The original input event is stored at the kernel layer. The application framework layer obtains the original input event from the kernel layer, and identifies a control corresponding to the input event. For example, the touch operation is a single-tap touch operation, and a control corresponding to the single-tap operation is a control of a camera application icon. A camera application invokes an interface at the application framework layer, to start the camera application. Then, the camera driver is started by invoking the kernel layer, and a static image or a video is captured through the camera 193.

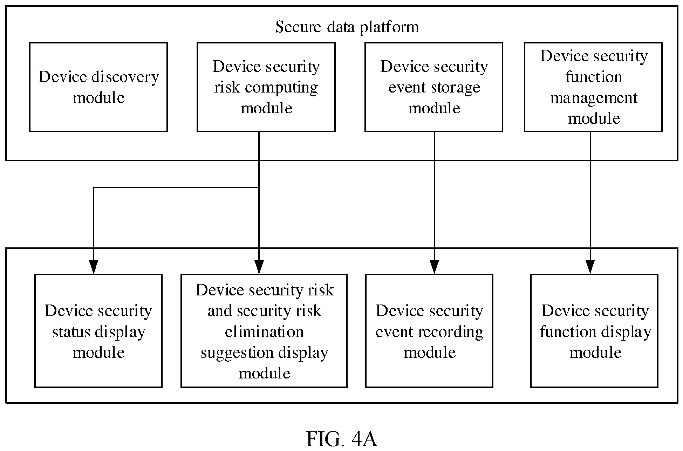

FIG. 4A is a diagram of an example of interaction between a plurality of functional modules of an electronic device 100.

As shown in FIG. 4A, a device discovery module is used by the electronic device 100 to discover an electronic device that currently establishes a communication connection to the electronic device 100.

If no electronic device 100 currently establishes a communication connection, the electronic device 100 may display only a device security status of the electronic device 100, a security risk that exists on the electronic device 100, a security function supported by the electronic device 100, a security event on the electronic device 100, and the like.

If there is currently another device that establishes a communication connection to the electronic device 100, the electronic device 100 may display a device security status of the electronic device 100, a security risk that exists on the electronic device 100, a security function supported by the electronic device 100, and a security event on the electronic device 100, and may further display a device security status of another device that establishes a communication connection to the electronic device 100, the security risk that exists on the electronic device 100, the security function supported by the electronic device 100, the security event on the electronic device 100, and the like.

Specifically, another electronic device (for example, an electronic device 200) establishes a communication connection to the electronic device 100. In a possible implementation, the electronic device 200 may send, to the electronic device 100, information such as a security function supported by the electronic device 200 and a security event generated by the electronic device 200 in a specific period of time. After receiving the information such as the security function supported by the electronic device 200 and the security event generated by the electronic device 200 in the specific period of time sent by the electronic device 200, the electronic device 100 determines, via a device security risk computing capability module based on information such as the security event generated by the electronic device 200 in the specific period of time, a device security status of the electronic device 200 and a security risk that exists on the electronic device 200. In another possible implementation, the electronic device 200 may locally determine, based on information such as a security event generated by the electronic device 200 in a specific period of time, a device security status of the electronic device 200 and a security risk that exists on the electronic device 200. Then, the electronic device 200 sends, to the electronic device 100, a security function supported by the electronic device 200, the device security status of the electronic device 200, and the security risk that exists on the electronic device 200.

The device security risk computing module may also determine, based on information such as a security event generated by the electronic device 100 in the specific period of time, the device security status of the electronic device 100 and the security risk that exists on the electronic device 100.

After the device security risk computing module determines the device security status of the electronic device 100 and the security risk that exists on the electronic device 100, and/or the device security status of the electronic device 200 and the security risk that exists on the electronic device 200, the device security risk computing module may display the device security status of the electronic device 100 and the device security status of the electronic device 200 via the device security status display module, and may also display, via the device security risk and security risk elimination suggestion display module, the security risk that exists on the electronic device 100 and the security risk that exists on the electronic device 200. The device security risk computing module may also display a corresponding security risk elimination suggestion via the device security risk and security risk elimination suggestion display module based on the security risk that exists on the electronic device 100 and/or the security risk that exists on the electronic device 200.

After obtaining the security event generated by the electronic device 100 in the specific period of time and the security event generated by the electronic device 200 in the specific period of time, a device security event storage module stores, on the electronic device 100, the security event generated by the electronic device 100 in the specific period of time and the security event generated by the electronic device 200 in the specific period of time. In addition, the device security event storage module may separately display, via the device security event recording module, the security events generated by the electronic device 100 and the electronic device 200 in the specific period of time.

After obtaining the security capability supported by the electronic device 100 and a security capability supported by the electronic device 200, a device security function management module may separately display, via a device security display module, the security capability supported by the electronic device 100 and the security capability supported by the electronic device 200.

Optionally, the electronic device 100 may also receive an operation of the user, to control enabling or disabling of one or more security functions on the electronic device 100 and the electronic device 200, to improve security of personal information on the electronic device 100 and the electronic device 200.

Optionally, after the electronic device 200 is disconnected from the electronic device 100, the electronic device 100 no longer displays the security status of the electronic device 200 and the security risk that exists on the electronic device 200.

With reference to UI diagrams, the following describes in detail a device security processing method provided in embodiments of this application.

It should be noted that the following UI diagrams are merely used to explain this application. During actual application, a user interface may be in a different display form. This is not limited in embodiments of this application.

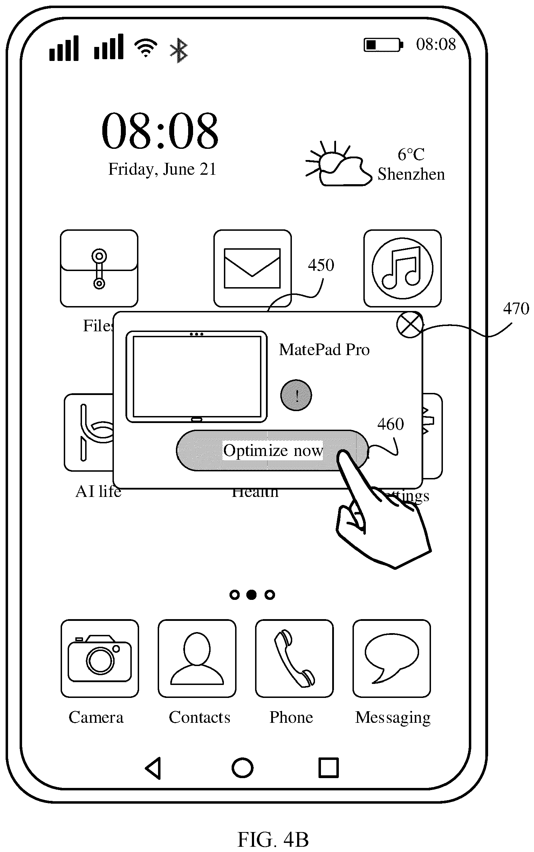

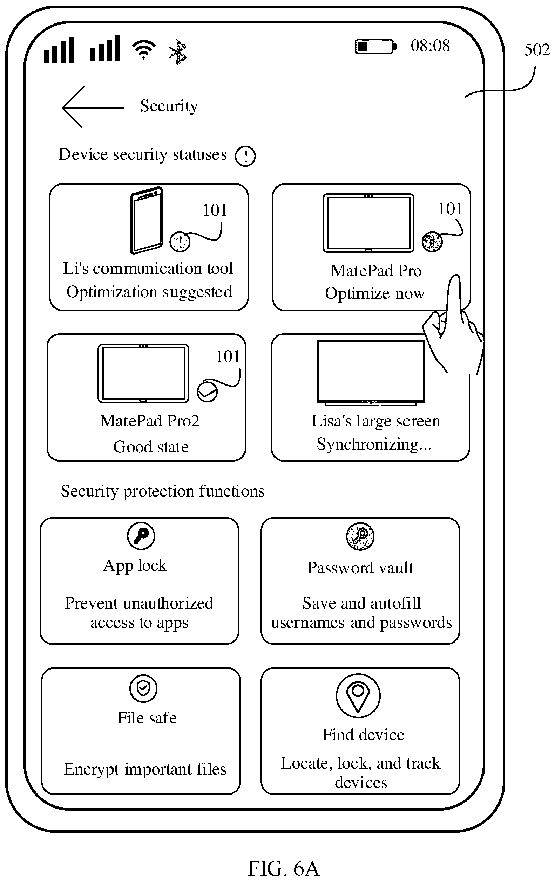

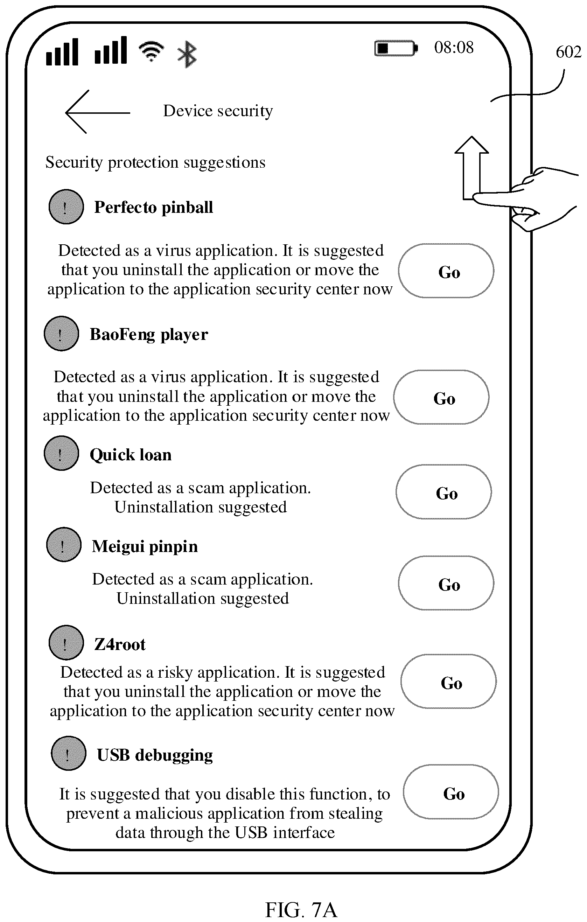

In some embodiments, after an electronic device 100 establishes a communication connection to another electronic device (for example, an electronic device 200), and the electronic device 100 detects that a security risk exists on the electronic device 200, the electronic device 200 may display a pop-up window to indicate a user whether to eliminate the security risk that exists on the electronic device 100. For example, as shown in FIG. 4B, the electronic device 100 may display prompt information 450. The prompt information 450 indicates the user whether to eliminate the security risk that exists on the electronic device 200. The electronic device 100 may receive an input operation (for example, a single tap) of the user on a control 460 in the prompt information 450. In a possible implementation, in response to the input operation of the user, the electronic device 100 may first display, for viewing by the user, the security risk that exists on the electronic device 200, and then the electronic device 100 receives a user operation to eliminate the security risk that exists on the electronic device 200. In another possible implementation, the electronic device 100 may first eliminate the security risk that exists on the electronic device 200, and then display prompt information to indicate the user to view which security risk is eliminated. The electronic device 100 may also receive a user operation to cancel elimination of the eliminated security risk that exists on the electronic device 200. For details, refer to embodiments shown in FIG. 6A to FIG. 6N and FIG. 7A to FIG. 7G. Details are not described in this embodiment of this application.

The electronic device 100 may alternatively receive an input operation (for example, a single tap) of the user on a control 470 in the prompt information 450. In response to the input operation of the user, the electronic device 100 ignores the prompt, that is, does not view the security risk that exists on the electronic device 200 and does not eliminate the security risk that exists on the electronic device 200.

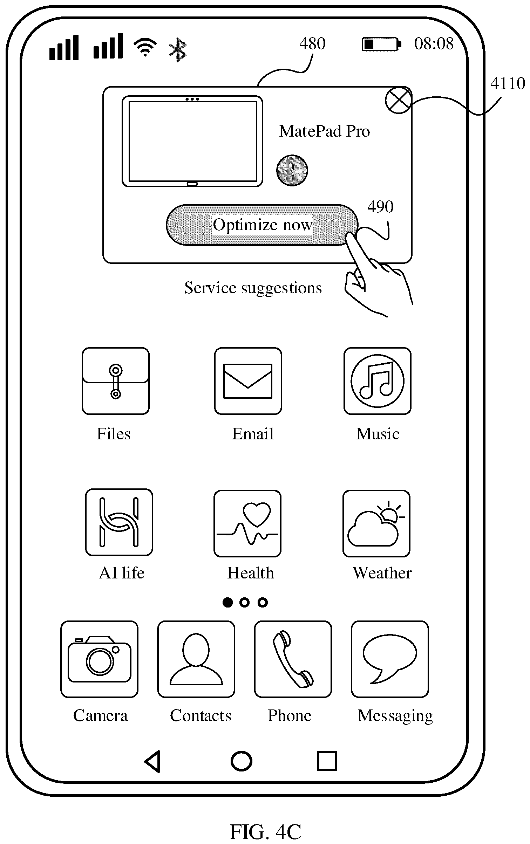

In another embodiment, after an electronic device 100 establishes a communication connection to another electronic device (for example, an electronic device 200), and the electronic device 100 detects that a security risk exists on the electronic device 200, the electronic device 200 may indicate a user in a service suggestion display area whether to eliminate the security risk that exists on the electronic device 100. For example, as shown in FIG. 4C, the electronic device 200 may display a service card 480 in the service suggestion display area. The service card 480 indicates, to the user, the security risk that exists on the electronic device 200 and indicates the user whether to eliminate the security risk. The electronic device 100 may receive an input operation (for example, a single tap) of the user on a control 490 in the service card 480. In a possible implementation, in response to the input operation of the user, the electronic device 100 may first display, for viewing by the user, the security risk that exists on the electronic device 200, and then the electronic device 100 receives a user operation to eliminate the security risk that exists on the electronic device 200. In another possible implementation, the electronic device 100 may first eliminate the security risk that exists on the electronic device 200, and then display prompt information to indicate the user to view which security risk is eliminated. The electronic device 100 may also receive a user operation to cancel elimination of the eliminated security risk that exists on the electronic device 200. For details, refer to embodiments shown in FIG. 6A to FIG. 6N and FIG. 7A to FIG. 7G. Details are not described in this embodiment of this application.

The electronic device 100 may alternatively receive an input operation (for example, a single tap) of the user on a control 4110 in the service card 480. In response to the input operation of the user, the electronic device 100 ignores the prompt, that is, does not view the security risk that exists on the electronic device 200 and does not eliminate the security risk that exists on the electronic device 200.

In addition to the prompt information 450 and the service card 480 that are displayed in FIG. 4B and FIG. 4C, the electronic device 100 may alternatively display prompt information in a drop-down notification bar, to indicate the user whether to view and eliminate the security risk that exists on the electronic device 200.

Optionally, when a security risk exists on the electronic device 100, the electronic device 100 may also indicate, to the user based on the embodiments shown in FIG. 4A and FIG. 4B, the security risk that exists on the electronic device 100. Details are not described again in this embodiment of this application.

In another embodiment, an electronic device 100 may alternatively view, in a settings application, a security risk that exists on the electronic device 100 and a security risk that exists on an electronic device that establishes a connection to the electronic device 200.

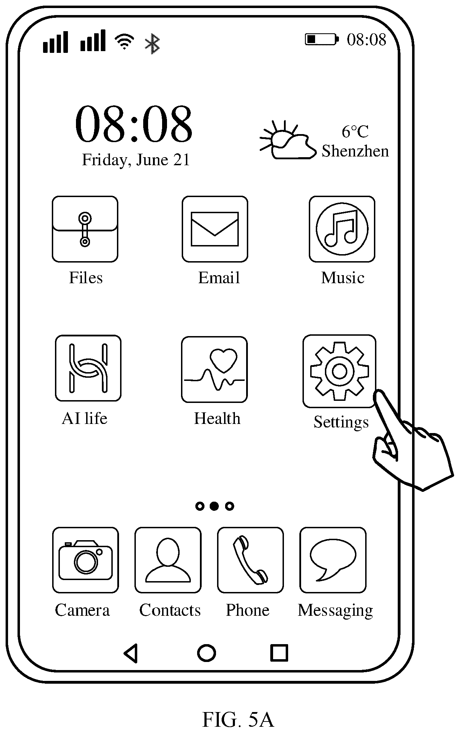

FIG. 5A to FIG. 5J are diagrams of an example in which the electronic device 100 may display device security statuses of one or more devices.

FIG. 5A shows an example of a home screen of the electronic device 100. FIG. 5A shows icons of a plurality of applications, for example, an icon of a files application, an icon of an email application, an icon of a music application, an icon of an AI life application, an icon of a health application, an icon of a settings application, an icon of a camera application, an icon of a contacts application, an icon of a phone application, and an icon of a messaging application. FIG. 5A further shows a page indicator, a weather indicator, a calendar indicator, a power indicator, a time indicator, a signal indicator, and the like.

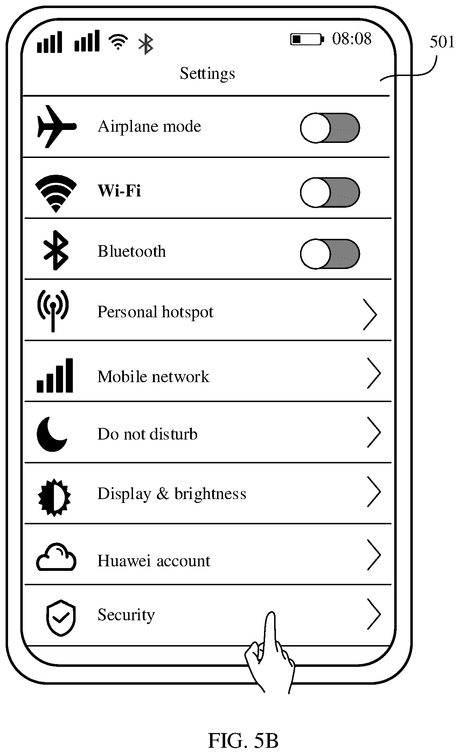

As shown in FIG. 5A, the electronic device 100 receives an input operation (for example, a single tap) of the user on the icon of the settings application. In response to the input operation of the user, the electronic device 100 displays a user interface 501 shown in FIG. 5B. The user interface 501 shows a plurality of setting items, for example, an airplane mode setting item (an airplane mode is currently off), a Wi-Fi setting item (Wi-Fi is currently off), a Bluetooth setting item (a Bluetooth function is currently off), a personal hotspot setting item, a mobile network setting item, a Do not disturb mode setting item, a display and brightness setting item, a Huawei account setting item, and a security setting item.

As shown in FIG. 5B, the electronic device 100 receives an input operation (for example, a single tap) of the user on the security setting item. In response to the input operation of the user, the electronic device 100 displays a user interface 502 shown in FIG. 5C.

The user interface 502 shows three parts of content: a device security status of the local device and/or a device security status of another interconnected device, a security function of the electronic device 100, and security events of the local device and the another interconnected devices in a specific period of time.

The device security status displayed on the user interface 502 is first described.

When the electronic device 100 is connected to another device, the device security status of the electronic device 100 and a security status of another device that establishes a communication connection to the electronic device 100 are displayed on the user interface 502.

A device security status includes but is not limited to a device name, a device security status indicator, a device security suggestion, and the like. Different device security status levels correspond to different device security suggestions.

As shown in FIG. 5C, the user interface 502 shows security statuses of four devices.

"Li's communication tool" is a device name of the electronic device 100. A device security status indicator of the electronic device 100 is 5021. The security status indicator 5021 indicates that the security status of the electronic device 100 is a "low risk". A security suggestion for the electronic device 100 is "Optimization suggested".

"MatePad Pro" is a device name of one device that establishes a communication connection to the electronic device 100. A device security status indicator of "MatePad Pro" is 5022. The security status indicator 5022 indicates that a security status of "MatePad Pro" is a "high risk". A security suggestion for "MatePad Pro" is "Optimize now".

"MatePad Pro2" is a device name of one device that establishes a communication connection to the electronic device 100. A device security status indicator of "MatePad Pro2" is 5023. The security status indicator 5023 indicates that a security status of "MatePad Pro2" is "no risk". A security suggestion for "MatePad Pro2" is "Good state".

"Lisa's large screen" is a device name of one device that establishes a communication connection to the electronic device 100. Before the electronic device 100 determines a security status of "Lisa's large screen", the electronic device 100 may display a word "Synchronizing...", to indicate, to the user, that the security status of "Lisa's large screen" is being synchronously displayed.

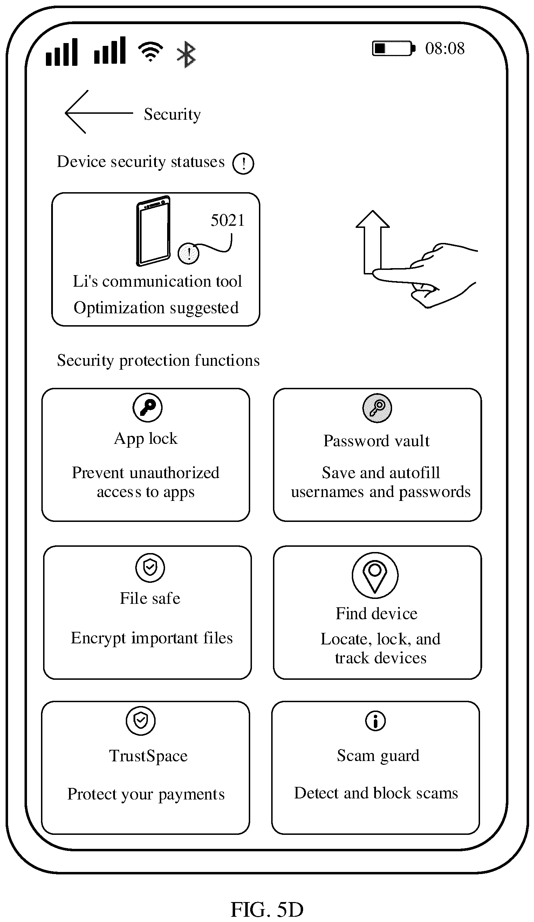

Optionally, if there is currently no device that establishes a communication connection to the electronic device 100, as shown in FIG. 5D, the electronic device 100 may display only the security status of the electronic device 100 on the user interface 502.

The user interface 502 further shows several important security functions supported by the electronic device 100, for example, an application lock function, a password vault function, a file safe function, and a find device function.

As shown in FIG. 5D, the electronic device 100 may receive a slide operation (for example, an upward slide operation) performed by the user on the user interface 502. In response to the slide operation of the user, the electronic device 100 may display other content that is not displayed.

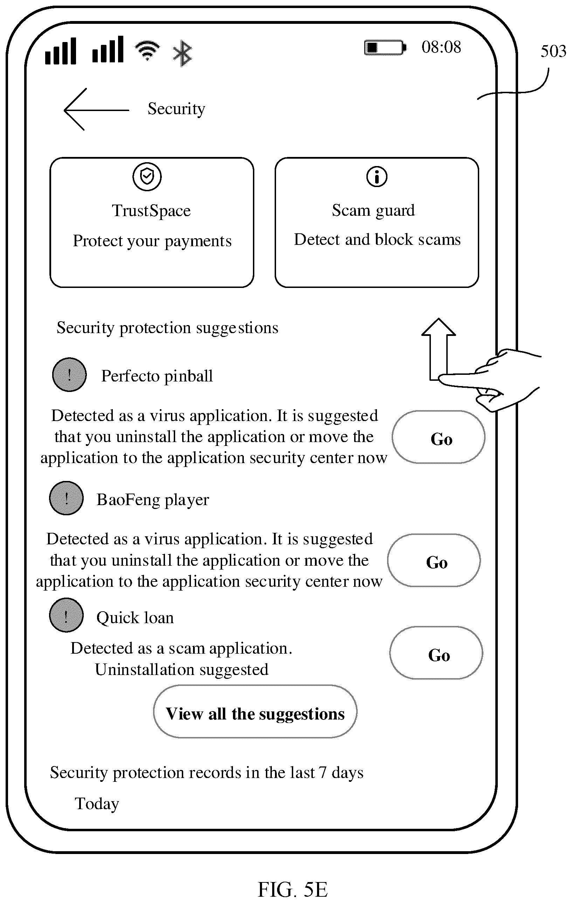

As shown in FIG. 5E, in response to the slide operation of the user, the electronic device 100 displays a user interface 503. The user interface 503 further shows security functions supported by the electronic device 100, for example, TrustSpace and a scam guard function. The electronic device 100 may receive a user operation to enable one or more security functions, to improve a security capability of the electronic device 100.

As shown in FIG. 5E, the user interface 503 further shows security protection suggestions. The security protection suggestions are security protection suggestions for the electronic device 100. For example, the security protection suggestions may include the following: "The "Perfecto pinball" application installed on the electronic device 100 is detected as a virus application. It is suggested that you uninstall the application or move the application to the application security center now". "The "BaoFeng player" application installed on the electronic device 100 is detected as a virus application. It is suggested that you uninstall the application or move the application to the application security center now". "The "Quick loan" application installed on the electronic device 100 is detected as a scam application. Uninstallation suggested". The security protection suggestions are used to indicate, to the user, security risks that exist on the electronic device 100, and indicate the user to eliminate, using specific methods, the security risks that exist on the electronic device 100.

As shown in FIG. 5E, the electronic device 100 may continue to receive a slide operation (for example, an upward slide operation) performed by the user on the user interface 502. In response to the slide operation of the user, the electronic device 100 may display other content that is not displayed.

In response to the slide operation of the user, the electronic device 100 may display a security event record generated by the electronic device 100 in a specific period of time and/or a security event record generated, in the specific period of time, by the another device interconnected to the electronic device 100. The security event record includes but is not limited to a security event type, a time point at which a security event occurs, content of the security event, and the like.

When there is another device that establishes a communication connection to the electronic device 100, the electronic device 100 may display the security event records generated, in the specific period of time, by the electronic device 100 and the another device interconnected to the electronic device 100.

When there is no another device that establishes a communication connection to the electronic device 100, the electronic device 100 may display only the security event record generated by the electronic device 100 in the specific period of time.

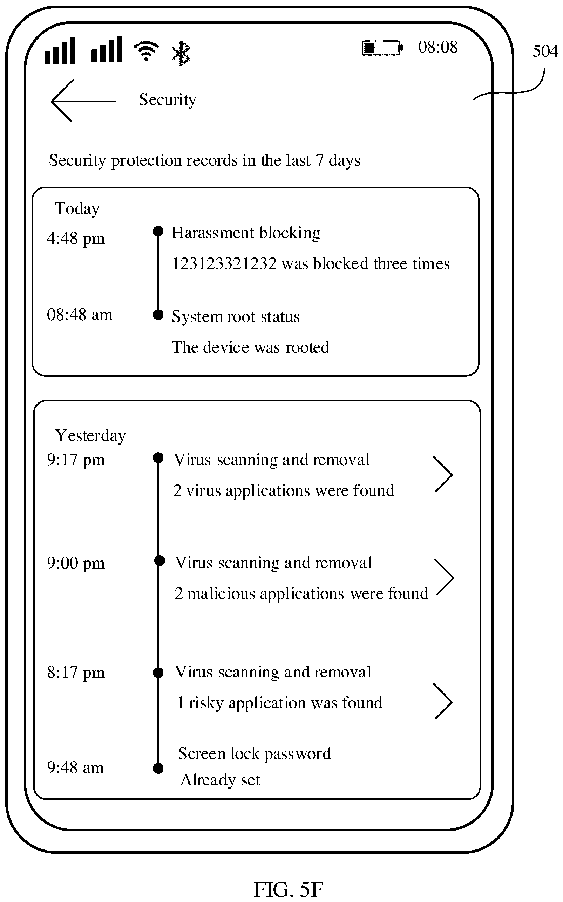

For example, as shown in FIG. 5F, in response to the slide operation of the user, the electronic device 100 displays a user interface 504. The security event records generated, in the specific period of time, by the electronic device 100 and the another device interconnected to the electronic device 200 are displayed on the user interface 504. For example, the security event records may be as follows: 4:48 pm today, a security event type being "Harassment blocking", and specific content being "123123321232 was blocked three times"; 08:48 am today, a security event type being "System root status", and specific content being "The device was rooted"; 9:17 pm yesterday, a security event type being "Virus scanning and removal", and specific content being "2 virus applications were found"; 09:00 pm yesterday, a security event type being "Virus scanning and removal", and specific content being "2 malicious applications were found"; 8:17 pm yesterday, a security event type being "Virus scanning and removal", and specific content being "1 risky application was found"; and 9:48 am yesterday, a security event type being "Lock screen password", and specific content being "The lock screen password was set".

Optionally, a security protection suggestion for the electronic device 100 and/or a security protection suggestion for the another device interconnected to the electronic device 100 may alternatively be displayed on the user interface 503.

When there is another device that establishes a communication connection to the electronic device 100, the electronic device 100 may display the security protection suggestions for the electronic device 100 and the another device interconnected to the electronic device 100.

When there is no another device that establishes a communication connection to the electronic device 100, the electronic device 100 may display only the security protection suggestion for the electronic device 100.

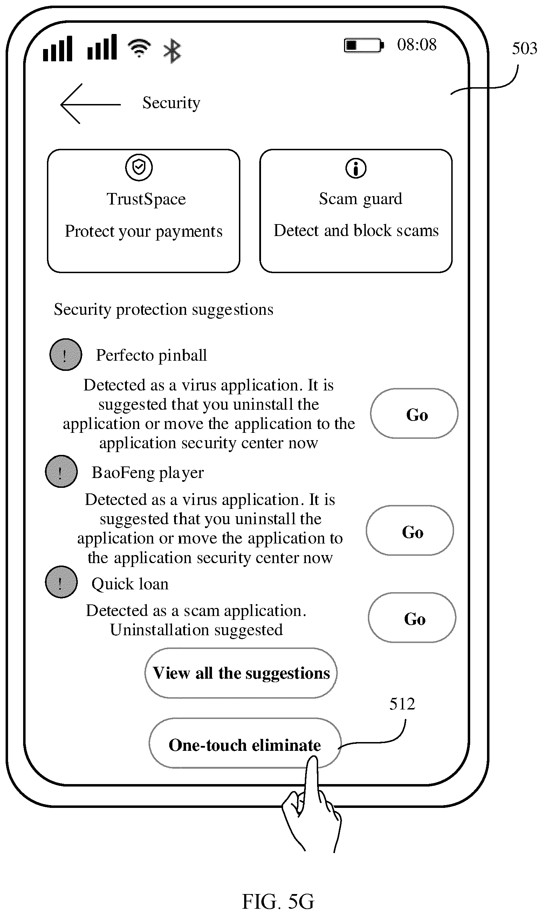

As shown in FIG. 5G, the user interface 503 further includes a "one-touch eliminate" control 512. The electronic device 100 may receive an input operation (for example, a single tap) of the user on the "one-touch eliminate" control 512. In response to the input operation of the user, the electronic device 100 may "one-touch" eliminate the security risk that exists on the electronic device 100 and/or a security risk that exists on the electronic device 200. This reduces a user operation.

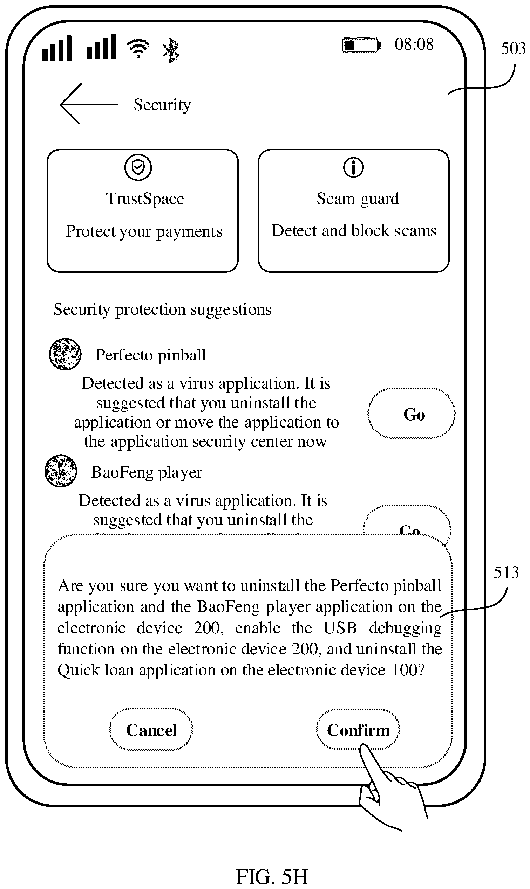

In response to the input operation of the user on the "one-touch eliminate" control 512, the electronic device 100 may display a prompt bar 513 shown in FIG. 5H.

The prompt bar 513 includes prompt information "Are you sure you want to uninstall the Perfecto pinball application and the BaoFeng player application on the electronic device 200, enable the USB debugging function on the electronic device 200, and uninstall the Quick loan application on the electronic device 100?" The prompt bar 513 further includes a cancel option and a confirm option. In this way, a misoperation of the user can be prevented.

The electronic device 100 may receive an input operation (for example, a single tap) of the user on the cancel option in the prompt bar 513. In response to the input operation of the user, the electronic device 100 suspends eliminating the security risks that exist on the electronic device 100 and the electronic device 200. The electronic device 100 may alternatively receive an input operation (for example, a single tap) of the user on the confirm option in the prompt bar 513. In response to the input operation of the user, the electronic device 100 eliminates all the security risks that exist on the electronic device 100 and the electronic device 200.

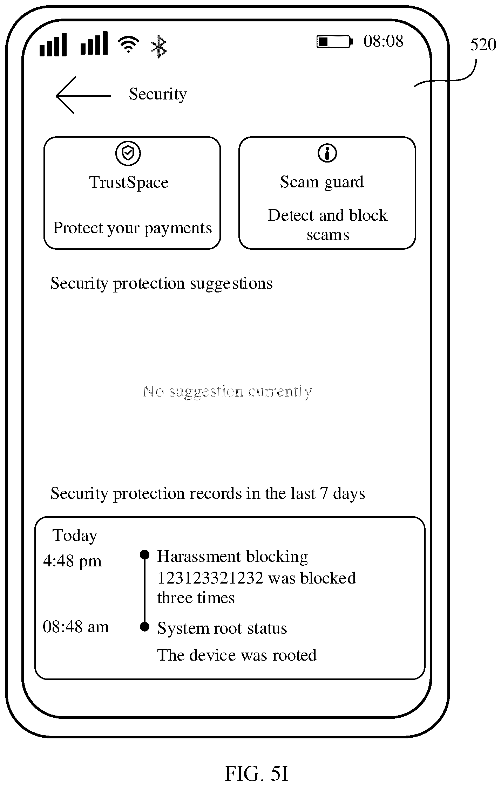

For example, as shown in FIG. 5H, the electronic device 100 receives the input operation (for example, the single tap) of the user on the confirm option in the prompt bar 513. In response to the input operation of the user, the electronic device 100 sends a control instruction to the electronic device 200 through a communication connection. The control instruction indicates the electronic device 200 to uninstall the Perfecto pinball application and the BaoFeng player application on the electronic device 200, and enable the USB debugging function on the electronic device 200. After receiving the control instruction sent by the electronic device 100, the electronic device 200 uninstalls the Perfecto pinball application and the BaoFeng player application on the electronic device 200, and enables the USB debugging function on the electronic device 200. After performing the operations, the electronic device 200 sends a performing success message to the electronic device 100. In addition, the electronic device 100 may uninstall the Quick loan application installed on the electronic device 100. After the electronic device 100 uninstalls the Quick loan application installed on the electronic device 100, and the electronic device 100 receives the performing success message sent by the electronic device 200, the electronic device 100 may display a user interface 520 shown in FIG. 5I. A security protection suggestion for the electronic device 100 and the electronic device 200 shown on the user interface 520 is "No suggestion currently".

It should be noted that the prompt bar 513 may alternatively be displayed on the electronic device 200. This is not limited in embodiments of this application.

A prompt bar or prompt information that is described in the following embodiments of this application and that is displayed on the electronic device 100 may be displayed on the electronic device 200, or may be displayed on both the electronic device 100 and the electronic device 200. This is not limited in embodiments of this application.

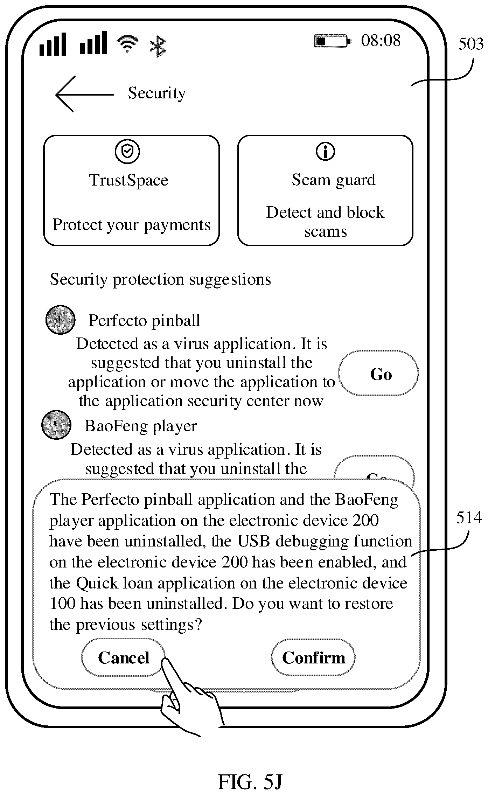

Alternatively, as shown in FIG. 5G, the electronic device 100 may receive an input operation (for example, a single tap) of the user on the "one-touch eliminate" control 512. In response to the input operation of the user, the electronic device 100 sends a control instruction to the electronic device 200 through a communication connection. The control instruction indicates the electronic device 200 to uninstall the Perfecto pinball application, the BaoFeng player application on the electronic device 200, and enable a USB debugging function on the electronic device 200. After receiving the control instruction sent by the electronic device 100, the electronic device 200 uninstalls the Perfecto pinball application and the BaoFeng player application on the electronic device 200, and enables the USB debugging function on the electronic device 200. After performing the operations, the electronic device 200 sends a performing success message to the electronic device 100. In addition, the electronic device 100 may uninstall the Quick loan application installed on the electronic device 100. After the electronic device 100 uninstalls the Quick loan application installed on the electronic device 100, and the electronic device 100 receives the performing success message sent by the electronic device 200, the electronic device 100 may display a prompt bar 514 shown in FIG. 5J. The prompt bar 514 includes prompt information "The Perfecto pinball application and the BaoFeng player application on the electronic device 200 have been uninstalled, the USB debugging function on the electronic device 200 has been enabled, and the Quick loan application on the electronic device 100 has been uninstalled. Do you want to restore the previous settings?" The prompt bar 514 further includes a cancel option and a confirm option. In this way, a misoperation of the user can be prevented.

The electronic device 100 may receive an input operation (for example, a single tap) of the user on the cancel option in the prompt bar 514. In response to the input operation of the user, the electronic device 100 determines to eliminate the security risks that exist on the electronic device 100 and the electronic device 200. The electronic device 100 may alternatively receive an input operation (for example, a single tap) of the user on the confirm option in the prompt bar 514. In response to the input operation of the user, the electronic device 100 cancels elimination of all the security risks that exist on the electronic device 100 and the electronic device 200.

For example, as shown in FIG. 5J, the electronic device 100 receives the input operation (for example, the single tap) of the user on the cancel option in the prompt bar 514. In response to the input operation of the user, the electronic device 100 determines to eliminate the security risks that exist on the electronic device 100 and the electronic device 200. Then, the electronic device 200 may display a user interface 520 shown in FIG. 5I.

It should be noted that the prompt bar 514 may alternatively be displayed on the electronic device 200. This is not limited in embodiments of this application.

Optionally, if only the security protection suggestion for the electronic device 100 is displayed on the user interface 503, all the security risks that exist on the electronic device 100 may be "one-touch eliminated" with reference to the operation method shown in FIG. 5G to FIG. 5J. This reduces a user operation, and is convenient and quick.

In some embodiments, the electronic device 100 may receive an operation of the user, to display a security status of a device, a security protection suggestion for the device, a security function supported by the device, a security event generated by the device in a specific period of time, and the like.

The device may be the electronic device 100, or may be a device that establishes a communication connection to the electronic device 100. This is not limited in embodiments of this application.

**FIG. 6A to FIG. 6E** **are diagrams of an example in which an electronic device 100 displays a security status of a device.**

For example, the device may be a device that establishes a communication connection to the electronic device 100, for example, may be MatePad Pro. An electronic device corresponding to the MatePad Pro may be referred to as an electronic device 200.

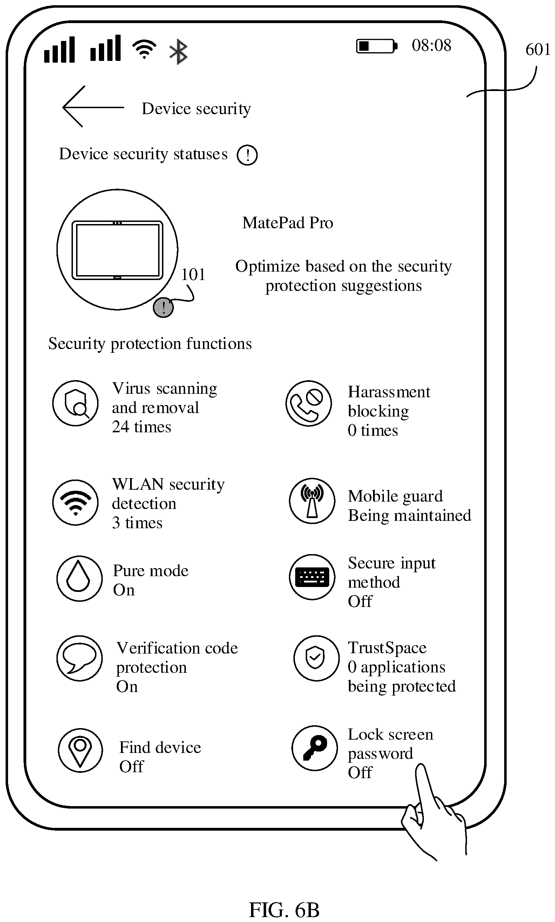

As shown in FIG. 6A, the electronic device 100 receives an input operation (for example, a single tap) of a user on an icon of the electronic device 200 on a user interface 502. In response to the input operation of the user, the electronic device 100 may display a user interface 601 shown in FIG. 6B.

The user interface 601 shows protection functions supported by the electronic device 200. As shown in FIG. 6B, the protection functions supported by the electronic device 200 include but are not limited to a virus scanning and removal function, a harassment call blocking function, a WLAN security detection function, a mobile guard function, a pure mode function, a secure input method function, a verification code protection function, a payment protection function, a find device function, a lock screen password function, and the like.

The protection function supported by the electronic device 200 may be different from a protection function supported by the electronic device 100. This is not limited in embodiments of this application.

It should be noted that different devices may support different security functions. Therefore, after the electronic device 200 establishes the communication connection to the electronic device 100, the electronic device 200 needs to send the supported security function to the electronic device 100, so that the electronic device 100 may display, on the interface, the security function supported by the electronic device 200.

The electronic device 100 may receive an operation of the user on the user interface 601, to enable/disable one or more protection functions supported by the electronic device 200.

In this embodiment of this application, an example in which the "lock screen password function" on the electronic device 200 is enabled on the electronic device 100 is used for description.

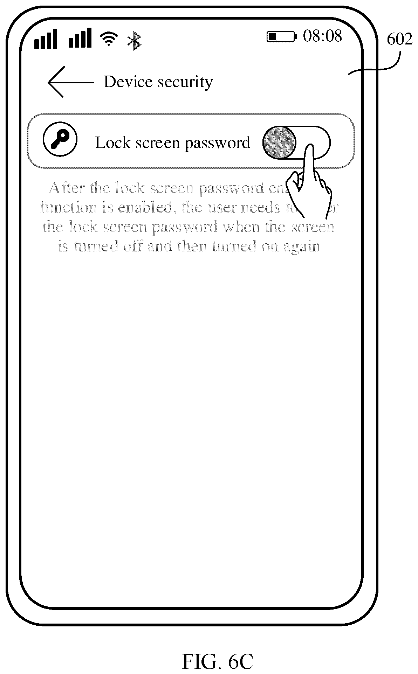

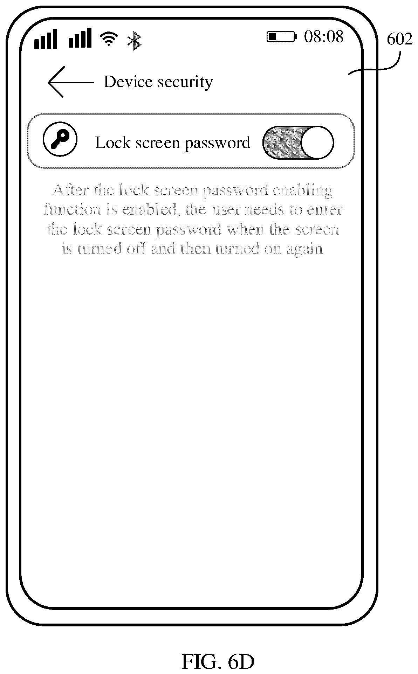

As shown in FIG. 6B, the electronic device 100 receives an input operation (for example, a single tap) of the user on a "lock screen password function" option on the user interface 601. In response to the input operation of the user, the electronic device 100 may display a user interface 602 shown in FIG. 6C. A display status of the "lock screen password function" option shown on the user interface 602 is an off state. As shown in FIG. 6C, the electronic device 100 receives an input operation (for example, a single tap) of the user on the "lock screen password function" option on the user interface 602. In response to the input operation of the user, the display status of the "lock screen password function" option shown in FIG. 6D is switched from the off state to an "on" state. Specifically, after the electronic device 100 receives the input operation (for example, the single tap) of the user on the "lock screen password function" option on the user interface 602, the electronic device 100 sends an enabling instruction to the electronic device 200 through the communication connection. After receiving the enabling instruction, the electronic device 200 enables the lock screen password function on the electronic device 200 in response to the enabling instruction. After the electronic device 200 enables the lock screen password function on the electronic device 200, the electronic device 200 sends an enabling success message to the electronic device 100. After receiving the enabling success message, the electronic device 100 determines that the electronic device 100 enables the "lock screen password function". In this case, the electronic device 100 may switch the display status of the "lock screen password function" option shown in FIG. 6D from the off state to the "on" state.

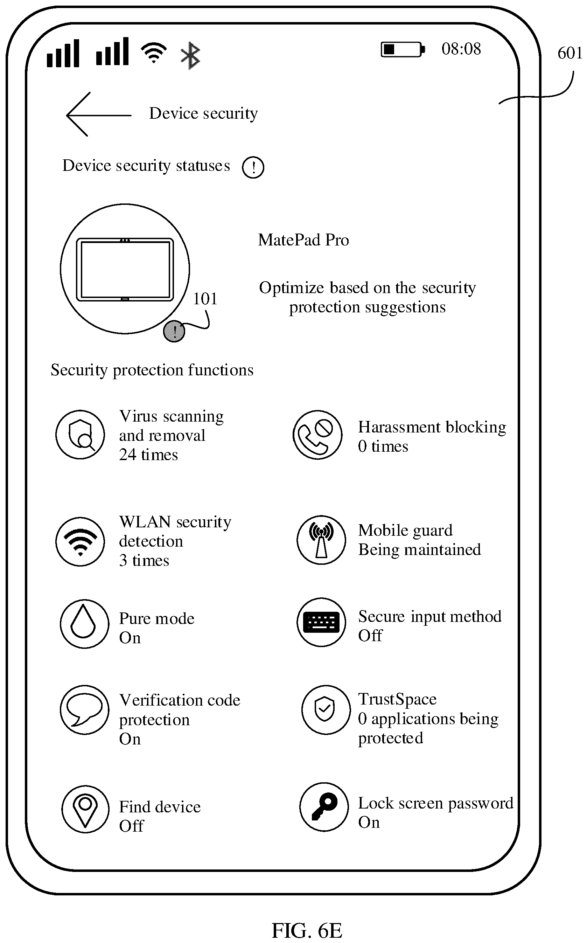

Optionally, as shown in FIG. 6E, the electronic device 100 may also switch the display status of the "lock screen password function" option on the user interface 601 from the off state to the "on" state.

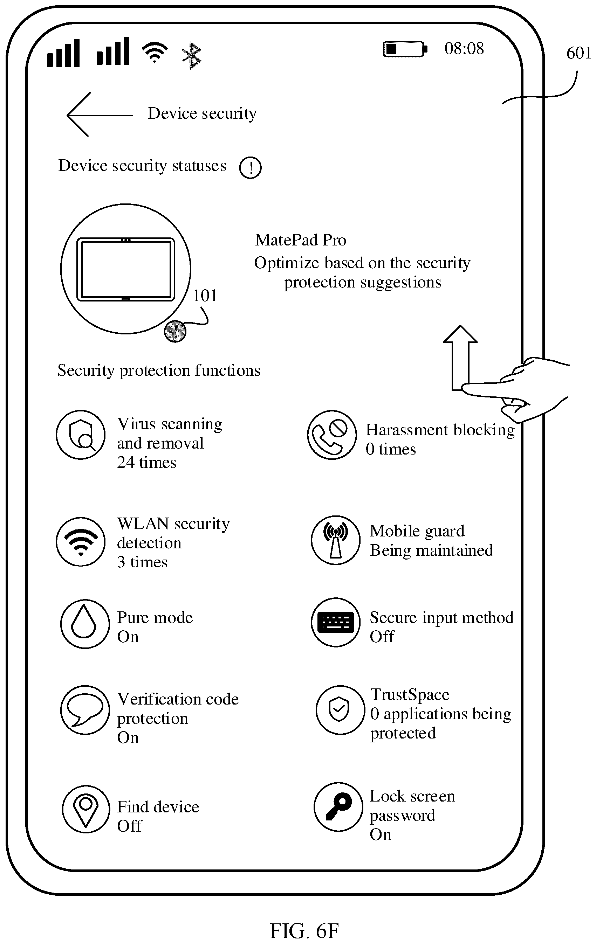

**FIG. 6F to FIG. 6J** **are diagrams of examples of a plurality of security protection suggestions provided for the electronic device 200.**

As shown in FIG. 6F, the electronic device 100 may receive a slide operation (for example, an upward slide operation) performed by the user on the user interface 601. In response to the slide operation of the user, the electronic device 100 may display another security risk item on the electronic device 200, for example, a security protection suggestion.

As shown in FIG. 6G, in response to the slide operation of the user, the electronic device 100 may display the user interface 602. The user interface 602 shows some security protection suggestions. The security protection suggestions are security protection suggestions for the electronic device 200. For example, the security protection suggestions may include the following: "Perfecto pinball is detected as a virus application. It is suggested that you uninstall the application or move the application to the application security center now". "Quick loan is detected as a scam application. Uninstallation suggested". "Meigui pinpin is detected as a scam application. Uninstallation suggested". "Z4root is detected as a risky application. It is suggested that you uninstall the application or move the application to the application security center now". "It is suggested that you disable the USB debugging function, to prevent a malicious application from stealing data through the USB interface".

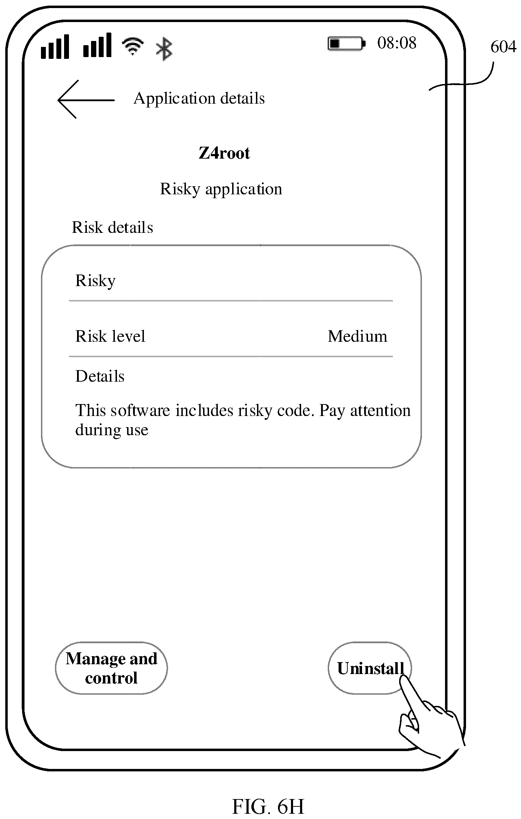

Optionally, the electronic device 100 may receive a user operation to view detailed content of a security protection suggestion. For example, as shown in FIG. 6G, the electronic device 100 may receive an input operation (for example, a single tap) of the user on an option 603. In response to the input operation of the user, the electronic device 100 may display a user interface 604 shown in FIG. 6H.

As shown in FIG. 6H, the user interface 604 is a management and control interface for the "Z4root" application. The user interface 604 shows a security suggestion for the "Z4root" application. For example, the "Z4root" application is an application that is risky, and a risk level of the "Z4root" application is medium. Risk details are "The 'Z4root' application includes risky code. The risky code may steal the personal information of the user. Pay attention during use". The user interface 604 further shows an option of managing and controlling the "Z4root" application and an option of uninstalling the "Z4root" application. The user may disable some permissions of the "Z4root" application on the electronic device 200 through an operation on the option of managing and controlling the "Z4root" application, for example, disabling a permission for accessing an album and disabling a permission for accessing an SMS message. The user may alternatively uninstall, through an operation on the option of uninstalling the "Z4root" application, the "Z4root" application installed on the electronic device 200.

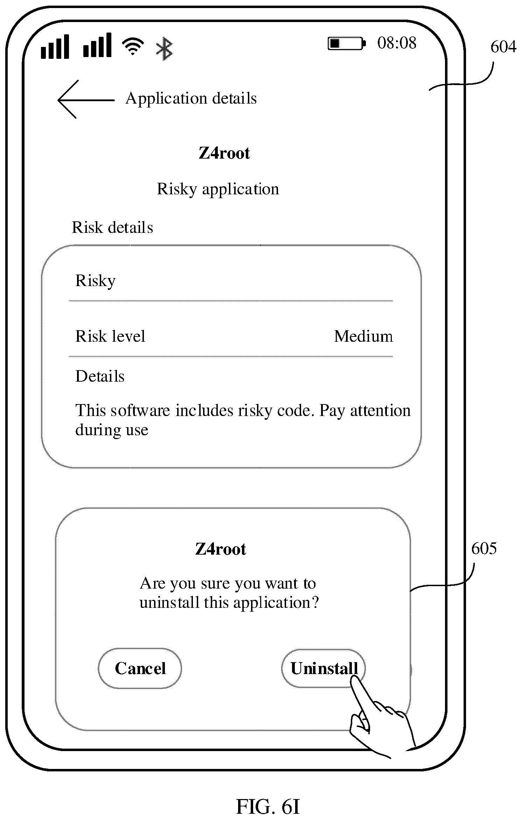

As shown in FIG. 6H, the electronic device 100 receives an input operation (for example, a single tap) of the user on the option of uninstalling the "Z4root" application on the user interface 604. In response to the input operation of the user, the electronic device 100 may display a prompt bar 605 shown in FIG. 6I. The prompt bar 605 indicates the user whether to continue to uninstall the "Z4root" application. The electronic device 100 may receive an input operation (for example, a single tap) of the user on a cancel control in the prompt bar 605. In response to the input operation of the user, the electronic device 100 suspends uninstalling the "Z4root" application installed on the electronic device 200. The electronic device 100 may alternatively receive an input operation (for example, a single tap) of the user on an uninstall control in the prompt bar 605. In response to the input operation of the user, the electronic device 100 uninstalls the "Z4root" application installed on the electronic device 200. Specifically, after the electronic device 100 receives the input operation of the user on the uninstall control in the prompt bar 605, the electronic device 100 may send an uninstallation instruction to the electronic device 200 through the communication connection. After receiving the uninstallation instruction, the electronic device 200 uninstalls, in response to the uninstallation instruction, the "Z4root" application installed on the electronic device 200.

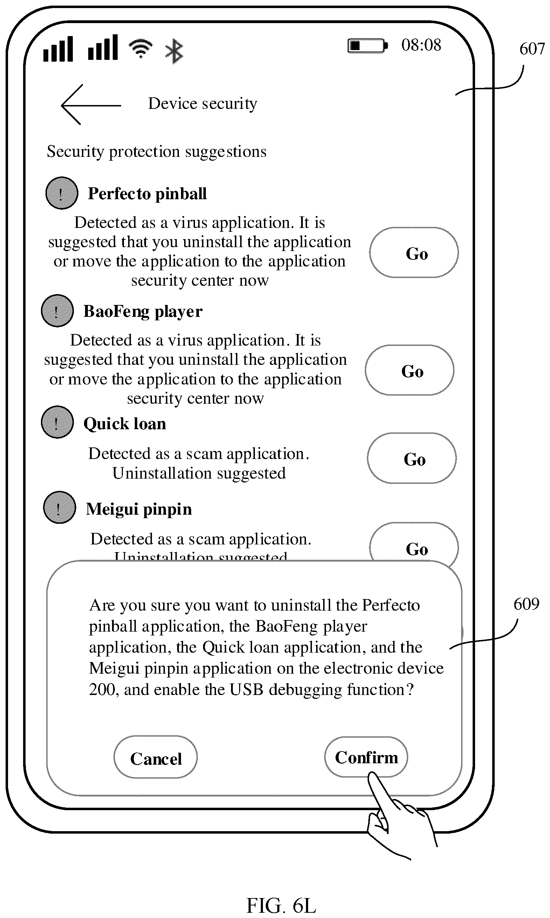

Optionally, in a possible implementation, after the electronic device 100 receives the input operation of the user on the option of uninstalling the "Z4root" application on the user interface 604, the electronic device 100 may first send an instruction to the second electronic device, to indicate the second electronic device to perform a corresponding operation. After the second electronic device completes performing the corresponding operation, the second electronic device sends a performing success message to the first electronic device. After receiving the performing success message sent by the second electronic device, the first electronic device may display prompt information shown in FIG. 6L, to indicate, to the user, the operation that has been performed by the second electronic device, and query the user whether to cancel the operation that has been performed by the second electronic device. The user may select again to accept the operation that has been performed by the second electronic device or cancel the operation that has been performed by the second electronic device.

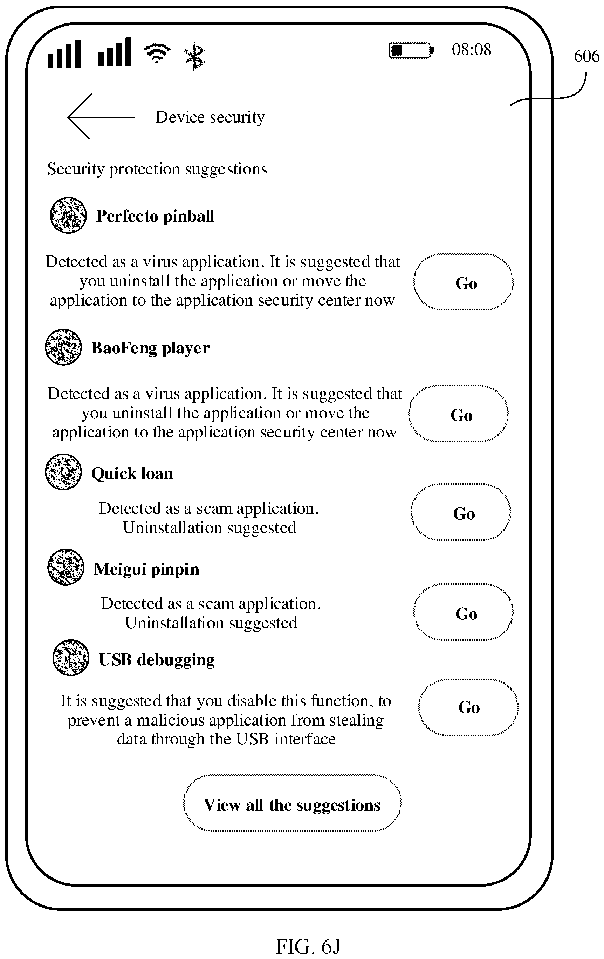

Optionally, after the electronic device 200 uninstalls the "Z4root" application installed on the electronic device 200, the electronic device 200 may send an uninstallation success message to the electronic device 100. After the electronic device 100 receives the uninstallation success message sent by the electronic device 200, as shown in FIG. 6J, the electronic device 100 may display a user interface 606. A difference between the user interface 606 and the user interface 602 lies in that the security protection suggestions for the electronic device 200 that are displayed on the user interface 606 do not include "Z4root is detected as a risky application. It is suggested that you uninstall the application or move the application to the application security center now". To be specific, it indicates that, after the "Z4root" application is deleted from the electronic device 200, a security threat caused by the "Z4root" application installed on the electronic device 200 is eliminated.

In some examples, the electronic device 100 may receive an input operation of the user on an option "View all the suggestions" on the user interface 606. In this way, the electronic device 100 can display all the security protection suggestions for the electronic device 200. Details are not described in this embodiment of this application. In the foregoing embodiments, the user interface 602 and the user interface 606 show only examples of some security protection suggestions. Compared with a security protection suggestion that is not displayed, the security protection suggestions may be understood as having a greater security protection effect on the electronic device 200.

FIG. 6G to FIG. 6J show examples in which the electronic device 100 may receive operations of the user, to sequentially (one by one) eliminate security risks that exist on the electronic device 200. In some examples, the electronic device 100 may alternatively receive an operation of the user, to "one-touch eliminate" all security risks that exist on the electronic device 200. This reduces an operation of the user.

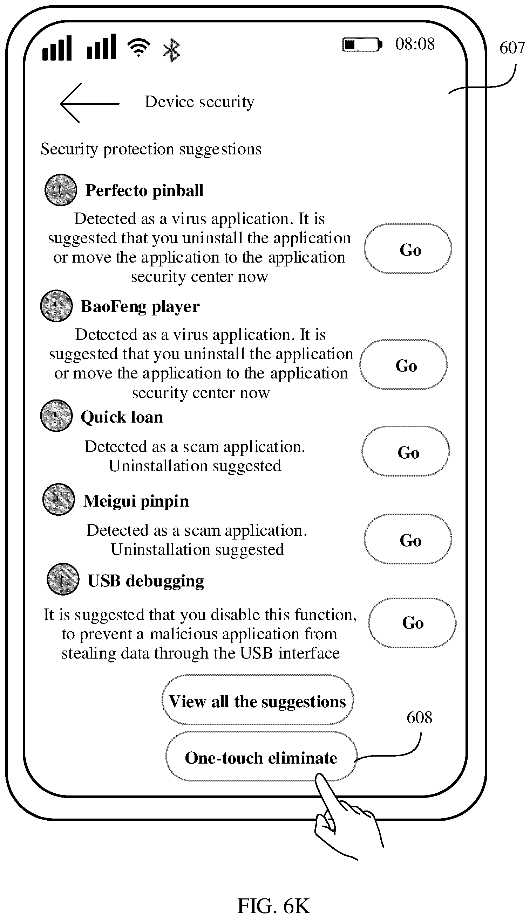

**FIG. 6K to FIG. 6N** **are diagrams of an example in which the electronic device 100 receives the user operation to "one-touch eliminate" all the security risks that exist on the electronic device 200.**

As shown in FIG. 6K, a user interface 607 shows a "one-touch eliminate" option 608. The electronic device 100 may receive an input operation (for example, a single tap) of the user on the "one-touch eliminate" option 608. In response to the input operation of the user, the electronic device 100 may display a prompt bar 609 shown in FIG. 6L. The prompt bar 609 includes prompt information "Are you sure you want to uninstall the Perfecto pinball application, the BaoFeng player application, the Quick loan application, and the Meigui pinpin application on the electronic device 200, and enable the USB debugging function?". The prompt bar 609 further includes a cancel option and a confirm option. In this way, a misoperation of the user can be prevented.

The electronic device 100 may receive an input operation (for example, a single tap) of the user on the cancel option in the prompt bar 609. In response to the input operation of the user, the electronic device 100 suspends eliminating the security risks that exist on the electronic device 200. The electronic device 100 may alternatively receive an input operation (for example, a single tap) of the user on the confirm option in the prompt bar 609. In response to the input operation of the user, the electronic device 100 eliminates all the security risks that exist on the electronic device 200.

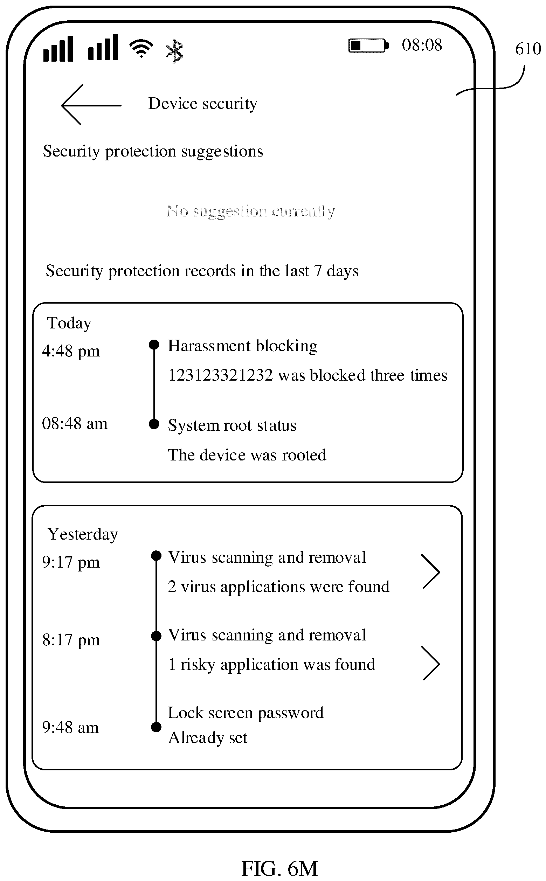

For example, as shown in FIG. 6L, the electronic device 100 receives the input operation (for example, the single tap) of the user on the confirm option in the prompt bar 609. In response to the input operation of the user, the electronic device 100 sends a control instruction to the electronic device 200 through the communication connection. The control instruction indicates the electronic device 200 to uninstall the Perfecto pinball application, the BaoFeng player application, the Quick loan application, and the Meigui pinpin application on the electronic device 200, and enable the USB debugging function on the electronic device 200. After receiving the control instruction sent by the electronic device 100, the electronic device 200 uninstalls the Perfecto pinball application, the BaoFeng player application, the Quick loan application, and the Meigui pinpin application on the electronic device 200, and enables the USB debugging function on the electronic device 200. After performing the operations, the electronic device 200 sends a performing success message to the electronic device 100. After the electronic device 100 receives the performing success message, the electronic device 100 may display a user interface 610 shown in FIG. 6M. A security protection suggestion for the electronic device 200 shown on the user interface 610 is "No suggestion currently".

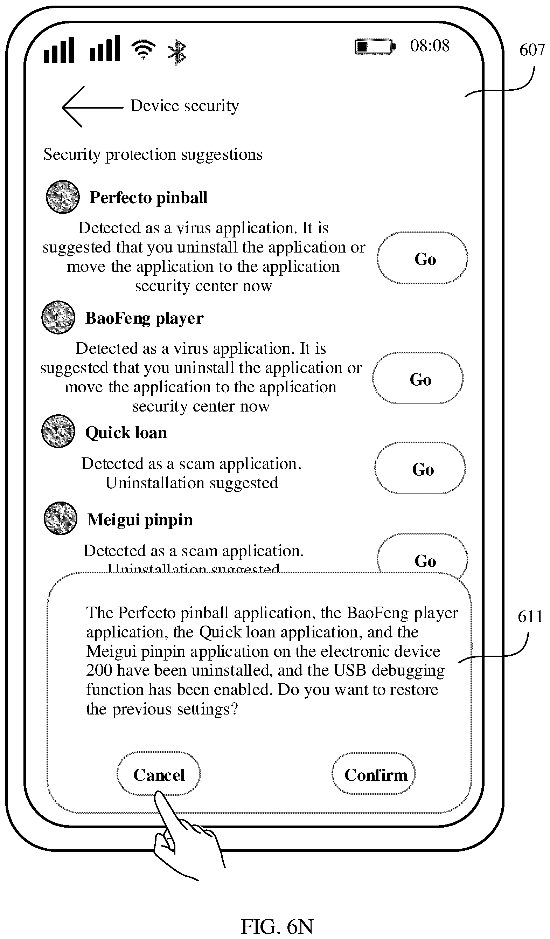

Alternatively, as shown in FIG. 6K, the electronic device 100 may receive an input operation (for example, a single tap) of the user on the "one-touch eliminate" option 608. In response to the input operation of the user, the electronic device 100 sends a control instruction to the electronic device 200 through the communication connection. The control instruction indicates the electronic device 200 to uninstall the Perfecto pinball application, the BaoFeng player application, a Quick loan application, and a Meigui pinpin application on the electronic device 200, and enable a USB debugging function on the electronic device 200. After receiving the control instruction sent by the electronic device 100, the electronic device 200 uninstalls the Perfecto pinball application, the BaoFeng player application, the Quick loan application, and the Meigui pinpin application on the electronic device 200, and enables the USB debugging function on the electronic device 200. After performing the operations, the electronic device 200 sends a performing success message to the electronic device 100. After the electronic device 100 receives the performing success message, the electronic device 100 may display a prompt bar 611 shown in FIG. 6N. The prompt bar 611 includes prompt information "The Perfecto pinball application, the BaoFeng player application, the Quick loan application, and the Meigui pinpin application on the electronic device 200 have been uninstalled, and the USB debugging function has been enabled. Do you want to restore the previous settings?" The prompt bar 611 further includes a cancel option and a confirm option. In this way, a misoperation of the user can be prevented.

The electronic device 100 may receive an input operation (for example, a single tap) of the user on the cancel option in the prompt bar 611. In response to the input operation of the user, the electronic device 100 determines to eliminate the security risks that exist on the electronic device 200. The electronic device 100 may alternatively receive an input operation (for example, a single tap) of the user on the confirm option in the prompt bar 611. In response to the input operation of the user, the electronic device 100 cancels elimination of all the security risks that exist on the electronic device 200.

For example, as shown in FIG. 6N, the electronic device 100 receives the input operation (for example, the single tap) of the user on the cancel option in the prompt bar 611. In response to the input operation of the user, the electronic device 100 determines to eliminate the security risks that exist on the electronic device 200. Then, the electronic device 200 may display a user interface 610 shown in FIG. 6M.

Optionally, the electronic device 100 may also receive a user operation to view a security event generated by the electronic device 200 in a specific period of time.

**FIG. 7A to FIG. 7G** **are diagrams of an example of viewing, on the electronic device 100, security events generated by the electronic device 200 in the specific period of time.**

As shown in FIG. 7A, after the electronic device 100 displays the user interface 602, the electronic device 100 may receive a slide operation (for example, an upward slide operation) performed by the user on the user interface 602. In response to the slide operation of the user, the electronic device 100 may display a user interface 701 shown in FIG. 7B.

As shown in FIG. 7B, the user interface 701 shows security records generated by the electronic device 200 in the specific period of time (for example, seven days). The security event record includes but is not limited to a security event type, a time point at which the security event occurs, content of the security event, and the like. For example, the security event records may be as follows: 4:48 pm today, a security event type being "Harassment blocking", and content of a security event being "123123321232 was blocked three times; 08:48 pm today, a security event type being "System root status", and content of a security event being "The device was rooted"; 09:17 pm yesterday, a security event type being "Virus scanning and removal", and content of a security event being "2 virus applications were found"; 08:17 pm yesterday, a security event type being "Virus scanning and removal", and content of a security event being that "1 virus application was found"; 09:48 am yesterday, a security event type being "Lock screen password", and content of a security event being "The lock screen password was set". 06:18 am yesterday, a security event type being "USB debugging", and content of a security event being "USB debugging was enabled".

In some examples, the electronic device 100 may receive an upward/downward slide operation of the user on the user interface 701, to view more security event records. Details are not described in this embodiment of this application.

In some examples, the electronic device 100 may alternatively receive a user operation to view a detailed record of a security event record.

As shown in FIG. 7B, the electronic device 100 receives an input operation (for example, a single tap) of the user on a view control 702. In response to the input operation of the user, the electronic device 100 may display a processing interface corresponding to the security event record.

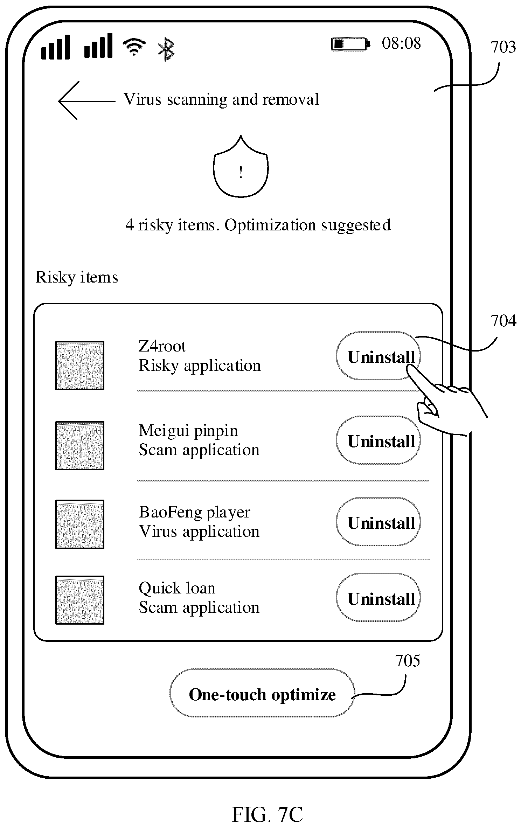

For example, the electronic device 100 may display a user interface 703 shown in FIG. 7C.

The user interface 703 shows risky applications detected on the electronic device 200 in the specific period of time (for example, seven days). Optionally, the user interface 703 may alternatively display two virus applications detected by the electronic device 100 at 9:17 pm yesterday. This is not limited in embodiments of this application.

The electronic device 100 may receive an operation of the user on the user interface 703, to uninstall one or more risky applications, so as to eliminate a security risk caused by the risky application that exists on the electronic device 200.

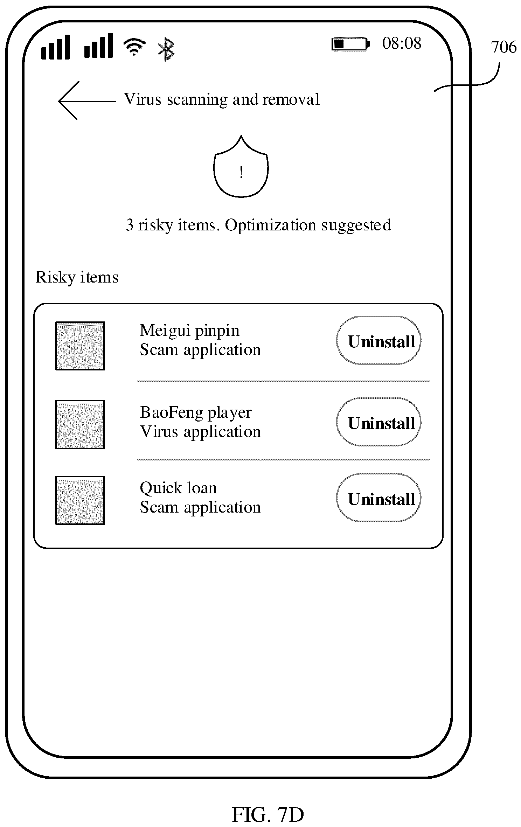

As shown in FIG. 7C, the electronic device 100 receives an input operation (for example, a single tap) of the user on an uninstall control 704. In response to the input operation of the user, the electronic device 100 may display a user interface 706 shown in FIG. 7D. After the electronic device 200 uninstalls the "Z4root" application, a risky application shown on the user interface 706 does not include the "Z4root" application.

Optionally, in a possible implementation, after the electronic device 100 receives the input operation of the user on the uninstall control 704, the electronic device 100 may display the prompt information shown in FIG. 6L, to indicate the user whether to perform the operation. After the user confirms performing, the electronic device 100 may send an instruction to the second electronic device, to indicate the second electronic device to perform the corresponding operation. In another possible implementation, after the electronic device 100 receives the input operation of the user on the uninstall control 704, the electronic device 100 may first send an instruction to the second electronic device, to indicate the second electronic device to perform a corresponding operation. After the second electronic device completes performing the corresponding operation, the second electronic device sends a performing success message to the first electronic device. After receiving the performing success message sent by the second electronic device, the first electronic device may display the prompt information shown in FIG. 6L, to indicate, to the user, the operation that has been performed by the second electronic device, and query the user whether to cancel the operation that has been performed by the second electronic device. The user may select again to accept the operation that has been performed by the second electronic device or cancel the operation that has been performed by the second electronic device.

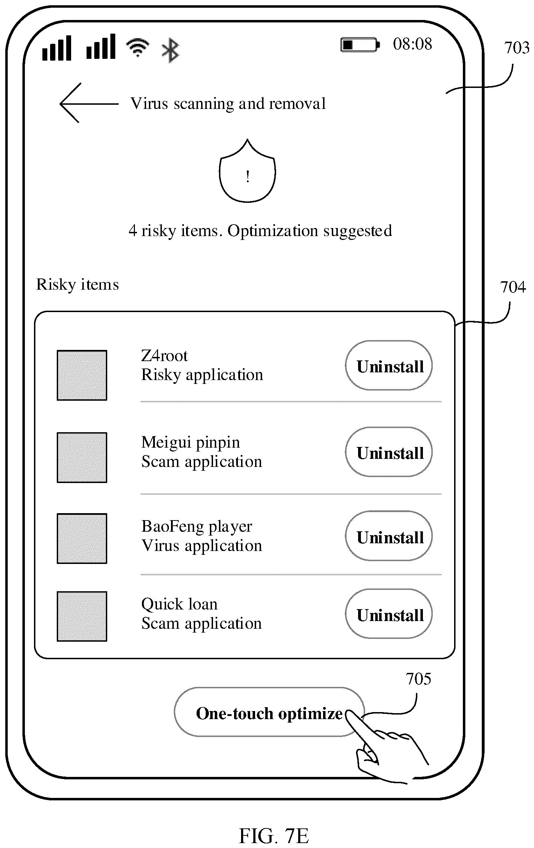

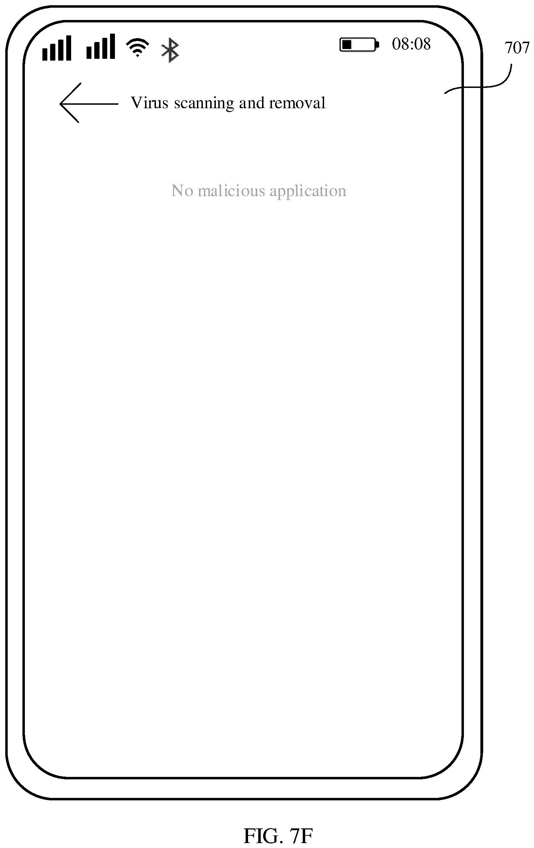

For another example, as shown in FIG. 7E, the electronic device 100 may alternatively receive an input operation of the user on a "one-touch optimize" control 705, to "one-touch" uninstall malicious applications that exist on the electronic device 200. This reduces a user operation. In response to the input operation of the user, the electronic device 100 may display a user interface 707 shown in FIG. 7F. After the electronic device 200 uninstalls all the malicious applications that exist on the electronic device 200, the electronic device 100 may display prompt information, to indicate, to the user, that there is currently no malicious application.

Optionally, in a possible implementation, after the electronic device 100 receives the input operation of the user on the "one-touch optimize" control 705, the electronic device 100 may display the prompt information shown in FIG. 6L, to indicate the user whether to perform the operation. After the user confirms performing, the electronic device 100 may send an instruction to the second electronic device, to indicate the second electronic device to perform the corresponding operation. In another possible implementation, after the electronic device 100 receives the input operation of the user on the "one-touch optimize" control 705, the electronic device 100 may first send an instruction to the second electronic device, to indicate the second electronic device to perform a corresponding operation. After the second electronic device completes performing the corresponding operation, the second electronic device sends a performing success message to the first electronic device. After receiving the performing success message sent by the second electronic device, the first electronic device may display the prompt information shown in FIG. 6L, to indicate, to the user, the operation that has been performed by the second electronic device, and query the user whether to cancel the operation that has been performed by the second electronic device. The user may select again to accept the operation that has been performed by the second electronic device or cancel the operation that has been performed by the second electronic device.

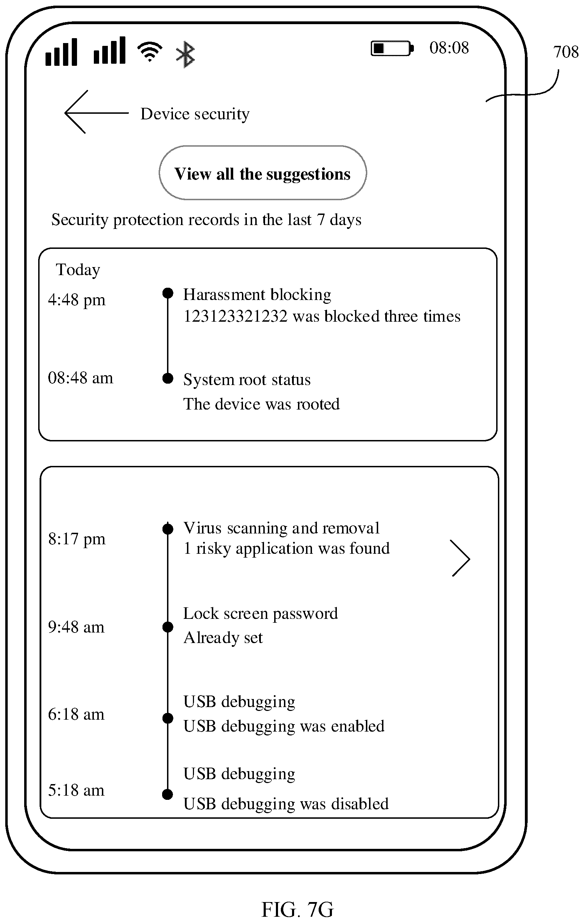

Optionally, after the electronic device 200 uninstalls the malicious applications, the security events that are displayed on the electronic device 100 and that are generated by the electronic device 200 in the specific period of time do not include a security event type of virus scanning and removal. For example, the electronic device 200 may display a user interface 708 shown in FIG. 7G. The user interface 708 does not include the security event type of virus scanning and removal. Compared with the user interface 701, the user interface 708 has an additional security event, which is specifically as follows: 05:18 am yesterday, a security event type being "USB debugging", and content of the security event being that "USB debugging was disabled".

Optionally, after the electronic device 200 uninstalls the malicious applications, a security event that "the malicious applications are uninstalled" may be added to the security events that are displayed on the electronic device 100 and that are generated by the electronic device 200 in the specific period of time. To be specific, a processing record may be displayed in a security protection record.

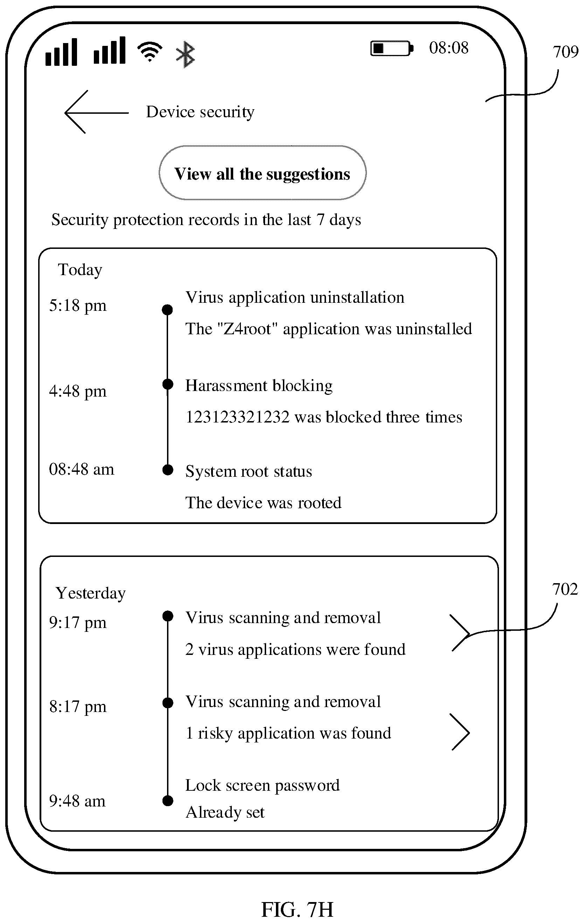

After the user uninstalls the "Z4root" application on the electronic device 200, the electronic device 100 may display a user interface 709 shown in FIG. 7H. A security protection record is added to the user interface 709. Details of the security protection record are as follows: 5:18 pm today, a security event type being "Virus application uninstallation", and content of a security event being "The "Z4root" application was uninstalled".

Optionally, after the user enables a security function or performs the security protection suggestion, the electronic device 100 may also display an operation record of the user in the security protection record.

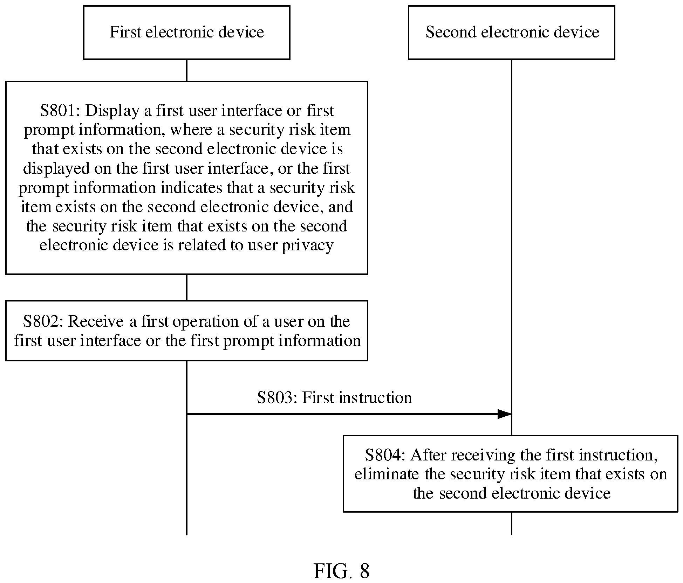

FIG. 8 is a schematic method flowchart of a device security processing method according to an embodiment of this application.

S801: A first electronic device displays a first user interface or first prompt information, where a security risk item that exists on a second electronic device is displayed on the first user interface, or the first prompt information indicates that a security risk item exists on a second electronic device, and the security risk item that exists on the second electronic device is related to user privacy.

The first electronic device may be an electronic device 100, and the second electronic device may be an electronic device 200.

The first user interface may be a user interface 602 shown in FIG. 6C. The first user interface may alternatively be a user interface 604 shown in FIG. 6H. The first user interface may alternatively be a user interface 607 shown in FIG. 6K. The first user interface may alternatively be a user interface 703 shown in FIG. 7C.

The first prompt information may be prompt information 450 shown in FIG. 4B, or the first prompt information may be a service card 480 shown in FIG. 4C.

S802: The first electronic device receives a first operation of a user on the first user interface or the first prompt information.

The first operation may be an input operation on a "lock screen password function" option on a user interface 602.

The first operation may alternatively be an input operation on an option of uninstalling a "Z4root" application on a user interface 604.

The first operation may alternatively be an input operation on a "one-touch eliminate" option 608 on a user interface 607.

The first operation may alternatively be an input operation on an uninstall control 704 on a user interface 703.

S803: The first electronic device sends a first instruction to the second electronic device after receiving the first operation.

The first electronic device may directly send the first instruction to the second electronic device. The first electronic device may alternatively send the first instruction to the second electronic device via the server. This is not limited in embodiments of this application.

In a possible implementation, the first electronic device is further configured to: after sending the first instruction to the second electronic device, stop displaying, on the first user interface, the security risk item that exists on the second electronic device, or stop displaying the first prompt information.

In this way, after the first electronic device sends the first instruction to the second electronic device, the first electronic device can stop displaying the security risk event that exists on the second electronic device.

In a possible implementation, the second electronic device is further configured to send a second instruction to the first electronic device after eliminating the security risk item that exists on the second electronic device. The first electronic device is further configured to: after receiving the second instruction, stop displaying, on the first user interface, the security risk item that exists on the second electronic device, or stop displaying the first prompt information.

In this way, after the first electronic device determines that the second electronic device has eliminated the security risk event that exists on the second electronic device, the first electronic device can stop displaying the security risk event that exists on the second electronic device.

As shown in FIG. 6M, a user interface 610 is used as an example. A security protection suggestion for the electronic device 200 shown on the user interface 610 is "No suggestion currently".

For another example, as shown in FIG. 6J, a security protection suggestion for the electronic device 200 displayed on a user interface 606 does not include "Z4root is detected as a risky application. It is suggested that you uninstall the application or move the application to the application security center now".

For another example, as shown in FIG. 7F, after the electronic device 200 uninstalls all malicious applications that exist on the electronic device 200, prompt information may be displayed on a user interface 707, to indicate, to the user, that there is no malicious application currently.

For another example, as shown in FIG. 7G, the user interface 708 does not include a security event type of virus scanning and removal.

S804: After receiving the first instruction, the second electronic device eliminates the security risk item that exists on the second electronic device.

In a possible implementation, the security risk item that exists on the second electronic device includes one or more items. The first operation is an operation of eliminating a first item in the security risk item that exists on the second electronic device. The second electronic device is specifically configured to: after receiving the first instruction, eliminate the first item that exists on the second electronic device.

In this way, the first electronic device can receive user operations to eliminate, one by one, security risk items that exist on the second electronic device, so that the user selectively eliminates one or more security risk items that exist on the second electronic device.

For example, as shown in FIG. 6G to FIG. 6I, the first electronic device may receive user operations to eliminate, one by one, security risk items that exist on the second electronic device.

In a possible implementation, the security risk item that exists on the second electronic device includes one or more items. The first operation is an operation of eliminating all the items in the security risk item that exists on the second electronic device. The second electronic device is specifically configured to: after receiving the first instruction, eliminate all the items that exist on the second electronic device.

In this way, the first electronic device can receive a user operation to "one-touch eliminate" all security risk items that exist on the second electronic device, which reduces a user operation, and is convenient and quick.

For example, as shown in FIG. 6K to FIG. 6N, the electronic device 100 may receive an input operation of the user on a "one-touch eliminate" option 608, to "one-touch eliminate" security risk items that exist on the electronic device 200.

In a possible implementation, the first electronic device is further configured to display a second user interface before displaying the first user interface, where the second user interface includes a device option of the first electronic device and a device option of the second electronic device, the device option of the first electronic device includes a security level indicator of the first electronic device, and the device option of the second electronic device includes a security level indicator of the second electronic device; and the security level indicator indicates a security status of an electronic device, and the security status includes any one of a high risk, a medium risk, a low risk, and no risk. The first electronic device is specifically configured to: receive and respond to a second operation of the user on the device option of the second electronic device on the second user interface, and display the first user interface.

Optionally, if the security status of the first electronic device is different from the security status of the second electronic device, the security level indicator of the first electronic device is different from the security level indicator of the second electronic device.

In this way, the first electronic device can display the security status of the first electronic device and/or a security status of another device, so that the user can monitor the security statuses of the first electronic device and the second electronic device, and manage and control an electronic device that is in a poor security state.

The second user interface may be a user interface 502 shown in FIG. 5C.

An identifier of the first electronic device may be "Li's communication tool", and an identifier of the second electronic device may be "MatePadPro".

The second operation may be an input operation (for example, a single tap) on an icon of an electronic device 200 on a user interface 502.

In a possible implementation, the first electronic device is further configured to: receive and respond to a third operation of the user on the second user interface, and display a third user interface, where a security risk item that exists on the first electronic device and the security risk item that exists on the second electronic device are displayed on the third user interface. The first electronic device is further configured to receive a fourth operation of the user on the third user interface, where the fourth operation is used to eliminate the security risk item on the first electronic device and the security risk item that exists on the second electronic device. The first electronic device is further configured to: in response to the fourth operation, eliminate the security risk item that exists on the first electronic device, and send a third instruction to the second electronic device. The second electronic device is further configured to: after receiving the third instruction, eliminate the security risk item that exists on the second electronic device.

Optionally, the user may perform operations on the first electronic device to eliminate, one by one, security risk items that exist on both the first electronic device and the second electronic device. For example, an application 1 and an application 2 exist on both the first electronic device and the second electronic device, and the application 1 and the application 2 are malicious applications. The user may perform an operation on the first electronic device to "one-touch uninstall" the application 1 that exists on both the first electronic device and the second electronic device. The first electronic device may further receive a user operation to "one-touch uninstall" the application 2 that exists on both the first electronic device and the second electronic device.

Optionally, the user may perform an operation on the first electronic device to "one-touch" eliminate all security risk items that exist on both the first electronic device and the second electronic device. For example, an application 1 and an application 2 exist on both the first electronic device and the second electronic device, and the application 1 and the application 2 are malicious applications. The user may perform an operation on the first electronic device to "one-touch uninstall" the application 1 and the application 2 that exist on both the first electronic device and the second electronic device. An operation is simple.

The third operation may be a slide operation on a user interface shown in FIG. 5D.

The third user interface may be a user interface 503 shown in FIG. 5G.

The fourth operation may be an input operation on a "one-touch eliminate" control 512 on the user interface 503 shown in FIG. 5G.

In a possible implementation, the first electronic device is specifically configured to: display second prompt information after receiving the first operation, where the second prompt information includes a first control, and the second prompt information indicates whether to eliminate the security risk item that exists on the second electronic device; and receive and respond to a fifth operation on the first control, and send the first instruction to the second electronic device. In this way, before the second electronic device eliminates the security risk item that exists on the second electronic device, the first electronic device can display prompt information, to avoid a misoperation of the user. Optionally, the prompt information may alternatively be displayed on the second electronic device.

The second prompt information may be a prompt bar 605 shown in FIG. 6I. The first control may be an uninstall control in the prompt bar 605. The fifth operation may be an input operation on the uninstall control in the prompt bar 605.

The second prompt information may be a prompt bar 609 shown in FIG. 6L. The first control may be a confirm option in the prompt bar 609. The fifth operation may be an input operation on the confirm option in the prompt bar 609.

In a possible implementation, the second electronic device is further configured to send the second instruction to the first electronic device after eliminating the security risk item that exists on the second electronic device. The first electronic device is further configured to display third prompt information after receiving the second instruction, where the third prompt information includes a second control, and the third prompt information indicates whether to cancel elimination of the security risk item that exists on the second electronic device. The first electronic device is specifically configured to: after receiving and responding to a sixth operation on the second control, determine to eliminate the security risk item that exists on the second electronic device. In this way, after the second electronic device eliminates the security risk item that exists on the second electronic device, the first electronic device can display prompt information, to notify the user of an operation that has been performed by the second electronic device, and can provide an option for the user to cancel the operation that has been performed by the second electronic device.

Optionally, the prompt information may alternatively be displayed on the second electronic device.

The third prompt information may be a prompt bar 611 shown in FIG. 6N. The second control may be a cancel option in the prompt bar 611. The sixth operation may be an input operation on the cancel option in the prompt bar 611.

In a possible implementation, eliminating the security risk item that exists on the second electronic device includes enabling a security function supported by the second electronic device, eliminating a security risk event generated by the second electronic device in first duration, and performing a security protection suggestion for the second electronic device.

Enabling the security function supported by the second electronic device may be enabling a "lock screen password" function on the electronic device 200 shown in FIG. 6B to FIG. 6E.

The security risk event may be the security protection record shown in the foregoing embodiments. Eliminating the security risk event generated by the second electronic device in the first duration may be uninstalling a Z4root application the electronic device 200 shown in FIG. 6G to FIG. 6I.

Performing the security protection suggestion for the second electronic device may be uninstalling the Z4root application on the electronic device 200 shown in FIG. 7B to FIG. 7D.

The implementations of this application may be randomly combined, to achieve different technical effect.

All or some of the foregoing embodiments may be implemented using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

A person of ordinary skill in the art may understand that all or some of the procedures of the methods in embodiments may be implemented by a computer program instructing relevant hardware. The program may be stored in a computer-readable storage medium. When the program is executed, the procedures of the methods in embodiments are performed. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A device security processing system, wherein the system comprises a first electronic device and a second electronic device;
the first electronic device is configured to display a first user interface or first prompt information, wherein a security risk item that exists on the second electronic device is displayed on the first user interface, or the first prompt information indicates that a security risk item exists on the second electronic device, and the security risk item that exists on the second electronic device is related to user privacy;
the first electronic device is further configured to receive a first operation of a user on the first user interface or the first prompt information, wherein the first operation is used to eliminate the security risk item that exists on the second electronic device;
the first electronic device is further configured to send a first instruction to the second electronic device after receiving the first operation; and
the second electronic device is configured to: after receiving the first instruction, eliminate the security risk item that exists on the second electronic device.

2. The system according to claim 1, wherein the first electronic device is further configured to: after sending the first instruction to the second electronic device, stop displaying, on the first user interface, the security risk item that exists on the second electronic device, or stop displaying the first prompt information.

3. The system according to claim 2, wherein the second electronic device is further configured to send a second instruction to the first electronic device after eliminating the security risk item that exists on the second electronic device; and
the first electronic device is further configured to: after receiving the second instruction, stop displaying, on the first user interface, the security risk item that exists on the second electronic device, or stop displaying the first prompt information.

4. The system according to any one of claims 1 to 3, wherein the security risk item that exists on the second electronic device comprises one or more items, and the first operation is an operation of eliminating a first item in the security risk item that exists on the second electronic device; and
the second electronic device is specifically configured to: after receiving the first instruction, eliminate the first item that exists on the second electronic device.

5. The system according to any one of claims 1 to 3, wherein the security risk item that exists on the second electronic device comprises one or more items, and the first operation is an operation of eliminating all the items in the security risk item that exists on the second electronic device; and
the second electronic device is specifically configured to: after receiving the first instruction, eliminate all the items that exist on the second electronic device.

6. The system according to any one of claims 1 to 5, wherein the first electronic device is further configured to display a second user interface before displaying the first user interface, wherein the second user interface comprises a device option of the first electronic device and a device option of the second electronic device, the device option of the first electronic device comprises a security level indicator of the first electronic device, and the device option of the second electronic device comprises a security level indicator of the second electronic device; and the security level indicator indicates a security status of an electronic device, and the security status comprises any one of a high risk, a medium risk, a low risk, and no risk; and
the first electronic device is specifically configured to: receive and respond to a second operation of the user on the device option of the second electronic device on the second user interface, and display the first user interface.

7. The system according to claim 6, wherein the first electronic device is further configured to: receive and respond to a third operation of the user on the second user interface, and display a third user interface, wherein a security risk item that exists on the first electronic device and the security risk item that exists on the second electronic device are displayed on the third user interface;
the first electronic device is further configured to receive a fourth operation of the user on the third user interface, wherein the fourth operation is used to eliminate the security risk item on the first electronic device and the security risk item that exists on the second electronic device;
the first electronic device is further configured to: in response to the fourth operation, eliminate the security risk item that exists on the first electronic device, and send a third instruction to the second electronic device; and
the second electronic device is further configured to: after receiving the third instruction, eliminate the security risk item that exists on the second electronic device.

8. The system according to any one of claims 1 to 7, wherein the first electronic device is specifically configured to:
display second prompt information after receiving the first operation, wherein the second prompt information comprises a first control, and the second prompt information indicates whether to eliminate the security risk item that exists on the second electronic device; and
receive and respond to a fifth operation on the first control, and send the first instruction to the second electronic device.

9. The system according to any one of claims 1 to 7, wherein the second electronic device is further configured to send the second instruction to the first electronic device after eliminating the security risk item that exists on the second electronic device;
the first electronic device is further configured to display third prompt information after receiving the second instruction, wherein the third prompt information comprises a second control, and the third prompt information indicates whether to cancel elimination of the security risk item that exists on the second electronic device; and
the first electronic device is specifically configured to: after receiving and responding to a sixth operation on the second control, determine to eliminate the security risk item that exists on the second electronic device.

10. The system according to any one of claims 1 to 9, wherein eliminating the security risk item that exists on the second electronic device comprises enabling a security function supported by the second electronic device, eliminating a security risk event generated by the second electronic device in first duration, and performing a security protection suggestion for the second electronic device.

11. A device security processing method, wherein the method comprises:
displaying, by a first electronic device, a first user interface or first prompt information, wherein a security risk item that exists on a second electronic device is displayed on the first user interface, or the first prompt information indicates that a security risk item exists on a second electronic device, and the security risk item that exists on the second electronic device is related to user privacy;
receiving, by the first electronic device, a first operation of a user on the first user interface or the first prompt information, wherein the first operation is used to eliminate the security risk item that exists on the second electronic device; and
sending, by the first electronic device, a first instruction to the second electronic device after receiving the first operation, wherein the first instruction indicates the second electronic device to eliminate the security risk item that exists on the second electronic device.

12. The method according to claim 11, wherein after the sending, by the first electronic device, a first instruction to the second electronic device, the method further comprises:
stopping displaying, by the first electronic device on the first user interface, the security risk item that exists on the second electronic device, or stopping displaying the first prompt information.

13. The method according to claim 12, wherein after the sending, by the first electronic device, a first instruction to the second electronic device, the method further comprises:
receiving, by the first electronic device, a second instruction sent by the second electronic device, wherein the second instruction indicates that the second electronic device has eliminated the security risk item that exists on the second electronic device; and
in response to the second instruction, stopping displaying, by the first electronic device on the first user interface, the security risk item that exists on the second electronic device, or stopping displaying the first prompt information.

14. The method according to any one of claims 11 to 13, wherein the security risk item that exists on the second electronic device comprises one or more items, and the first operation is an operation of eliminating a first item in the security risk item that exists on the second electronic device.

15. The method according to any one of claims 11 to 13, wherein the security risk item that exists on the second electronic device comprises one or more items, and the first operation is an operation of eliminating all the items in the security risk item that exists on the second electronic device.

16. The method according to any one of claims 11 to 15, wherein before the displaying, by a first electronic device, a first user interface, the method further comprises:
displaying, by the first electronic device, a second user interface, wherein the second user interface comprises a device option of the first electronic device and a device option of the second electronic device, the device option of the first electronic device comprises a security level indicator of the first electronic device, and the device option of the second electronic device comprises a security level indicator of the second electronic device; and the security level indicator indicates a security status of an electronic device, and the security status comprises any one of a high risk, a medium risk, a low risk, and no risk; and
the displaying, by a first electronic device, a first user interface specifically comprises:
receiving and responding to, by the first electronic device, a second operation of the user on the device option of the second electronic device on the second user interface, and displaying the first user interface.

17. The method according to claim 16, wherein after the displaying, by the first electronic device, a second user interface, and before the displaying, by a first electronic device, a first user interface, the method further comprises:
receiving and responding to, by the first electronic device, a third operation of the user on the second user interface, and displaying a third user interface, wherein a security risk item that exists on the first electronic device and the security risk item that exists on the second electronic device are displayed on the third user interface;
receiving, by the first electronic device, a fourth operation of the user on the third user interface, wherein the fourth operation is used to eliminate the security risk item on the first electronic device and the security risk item that exists on the second electronic device; and
in response to the fourth operation, eliminating, by the first electronic device, the security risk item that exists on the first electronic device, and sending a third instruction to the second electronic device, wherein the third instruction indicates the second electronic device to eliminate the security risk item that exists on the second electronic device.

18. The method according to any one of claims 11 to 17, wherein the sending, by the first electronic device, a first instruction to the second electronic device after receiving the first operation specifically comprises:
displaying, by the first electronic device, second prompt information after receiving the first operation, wherein the second prompt information comprises a first control, and the second prompt information indicates whether to eliminate the security risk item that exists on the second electronic device; and
receiving and responding to, by the first electronic device, a fifth operation on the first control, and sending the first instruction to the second electronic device.

19. The method according to any one of claims 11 to 17, wherein after the sending, by the first electronic device, a first instruction to the second electronic device, the method further comprises:
receiving, by the first electronic device, the second instruction sent by the second electronic device, wherein the second instruction indicates that the second electronic device has eliminated the security risk item that exists on the second electronic device;
displaying, by the first electronic device, third prompt information after receiving the second instruction, wherein the third prompt information comprises a second control, and the third prompt information indicates whether to cancel elimination of the security risk item that exists on the second electronic device; and
determining, by the first electronic device after receiving and responding to a sixth operation on the second control, to eliminate the security risk item that exists on the second electronic device.

20. The method according to any one of claims 11 to 19, wherein eliminating the security risk item that exists on the second electronic device comprises enabling a security function supported by the second electronic device, eliminating a security risk event generated by the second electronic device in first duration, and performing a security protection suggestion for the second electronic device.

21. An electronic device, being a first electronic device, wherein the first electronic device comprises one or more processors and one or more memories; the one or more memories are coupled to the one or more processors, the one or more memories are configured to store computer program code, and the computer program code comprises computer instructions; and the one or more processors invoke the computer instructions, to enable the first electronic device to perform the method according to any one of claims 11 to 20.

22. A computer-readable storage medium, configured to store computer instructions, wherein when the computer instructions are run on a first electronic device, the first electronic device is enabled to perform the method according to any one of claims 11 to 20.

23. A computer program product, wherein when the computer program product runs on a first electronic device, the first electronic device is enabled to perform the method according to any one of claims 11 to 20.
